# EUROPEAN PATENT APPLICATION

(11) **EP 3 296 002 A1**
(43) Date of publication of application: **21.03.2018**
(21) Application number: 17182452.7
(22) Date of filing: 29.07.2011
(51) Int. Cl.: A63F 13/71, A63F 13/792, A63F 13/30, A63F 13/65

(54) **PAYMENT CARDS, DEVICES, SYSTEMS, AND METHODS FOR PROVIDING GAME ACTIONS WITH PAYMENT DATA, SOCIAL NETWORKING MECHANISMS AND INFORMATION EXCHANGE MECHANISMS**

(30) Priority: 29.07.2010 US 201061369006 P; 31.01.2011 US 201161438239 P; 16.02.2011 US 201161443662 P; 13.06.2011 US 201113158456; 13.06.2011 US 201113158458; 13.06.2011 US 201113158461
(62) Divisional of application: 11813282.8
(71) Applicant: Dynamics Inc., Pittsburgh, PA 15024 (US)
(72) Inventor: YEN, Philip W., Cupertino California 95014 (US); MULLEN, Jeffrey D., Pittsburgh Pennsylvania 15232 (US); RIGATTI, Christopher J., Pittsburgh Pennsylvania 15212 (US)
(74) Representative: Rooney, John-Paul

(57) **Abstract**

Payment cards and devices are provided that allow a user to select an action associated with a video game by making a payment. Such a video game may be, for example, a video game operated on a remote server and operable to be accessed by multiple players such as a multiplayer game accessed via a social networking website. A card may receive, store, purchase and/or share one or more coupon offers (e.g., promotions, awards, rewards, or incentives). Coupon offers, associated details, and associated coupon detail updates may be displayed onto one or more displays of a card. A card, or other device (e.g. a mobile telephonic device), may provide transaction, feature information, and/or any other type of information to a merchant terminal based upon check-in options that may be selected by the user on the card, which may be shared with network entities to track cardholder movement.

## Description

### Background of the Invention

This invention relates to magnetic cards and devices and associated payment systems.

### Summary of the Invention

Systems and methods are provided for allowing a user to determine a game action for a game on a payment card or device and passing this game action through a payment card reader to a remote server, such as a remote server managing that game. Accordingly, a user may interact with, and progress through, a game by making a payment, such as an in-store payment. For online or phone purchases, a display on the card, or other device, may display a code, associated with a selected game action, that may be entered into the online purchase environment (e.g., via a text box for receiving three or four digit security code for a payment card) or spoken verbally over the phone to an operator. The payment actions may be determined, for example, via a user interaction with the card. Particularly, for example, a user may press a button on the card, or other device (e.g. a mobile telephonic device), from a group of buttons, that is associated with the game action. Such game actions may be unique from the game actions provided to the user via gameplay on the user's home gaming console, mobile telephonic device, or computing device such as a tablet computer, laptop computer, or stationary computer. Accordingly, a user may obtain the benefit of the whimsical and festive nature of a unique game action every time the user makes a payment that the user, for example, cannot otherwise obtain by playing the game. The game action may be provided, for example, via an output device operable to be read by a card reader. For example, the game action may be provided on a card, or other device (e.g., mobile telephonic device), by a dynamic magnetic stripe communications device, an RFID antenna, an exposed IC chip, or any other type of device for communicating with a card, or other device, reader. For online purchases, for example, a display may be provided on the card and a user selection may cause a particular number (e.g., a particular code) to be displayed on the card. Such a code may be entered into a text box on a website at checkout and may be representative of the user's desired game action. Accordingly, the game action may be communicated to a game server such that the game action may be performed in the game on behalf of the user. The code may additionally provide the benefits of a security code and may be entered with a payment card number (e.g., a credit or debit card number) at online or in-store checkout.

Game currency, for example, may be awarded based on the amount of a purchase. A set amount of game currency may be awarded at every purchase. A user may select, via, for example, buttons on the card the type of game currency the user desires. Buttons may be touch buttons (e.g., capacitive touch buttons) or mechanical buttons. Multiple games from a game manufacturer, for example, may be provided with separate virtual game currency for each game and the user may select the particular virtual game currency for a particular game the user desires to earn by making a purchase. A game may be provided with multiple types of virtual game currency and the user may select a particular virtual currency for that game.

A card may include a dynamic magnetic stripe communications device. Such a dynamic magnetic stripe communications device may take the form of a magnetic encoder or a magnetic emulator. A magnetic encoder may change the information located on a magnetic medium such that a magnetic stripe reader may read changed magnetic information from the magnetic medium. A magnetic emulator may generate electromagnetic fields that directly communicate data to a magnetic stripe reader. Such a magnetic emulator may communicate data serially to a read-head of the magnetic stripe reader.

All, or substantially all, of the front as well as the back of a card may be a display (e.g., bi-stable, non bi-stable, LCD, LED, or electrochromic display). Electrodes of a display may be coupled to one or more capacitive touch sensors such that a display may be provided as a touch-screen display. Any type of touch-screen display may be utilized. Such touch-screen displays may be operable of determining multiple points of touch. Accordingly, a barcode may be displayed across all, or substantially all, of a surface of a card. In doing so, computer vision equipment such as barcode readers may be less susceptible to errors in reading a displayed barcode.

A card, or other device (e.g., a mobile telephonic or computing device), may include a number of output devices to output dynamic information. For example, a card may include one or more RFIDs or IC chips to communicate to one or more RFID readers or IC chip readers, respectively. A card may include devices to receive information. For example, an RFID and IC chip may both receive information and communicate information to an RFID and IC chip reader, respectively. A device for receiving wireless information signals may be provided. A light sensing device or sound sensing device may be utilized to receive information wirelessly. A card may include a central processor that communicates data through one or more output devices simultaneously (e.g., an RFID, IC chip, and a dynamic magnetic stripe communications device). The central processor may receive information from one or more input devices simultaneously (e.g., an RFID, IC chip, dynamic magnetic stripe devices, light sensing device, and a sound sensing device). A processor may be coupled to surface contacts such that the processor may perform the processing capabilities of, for example, an EMV chip. The processor may be laminated over and not exposed such that such a processor is not exposed on the surface of the card.

A card may be provided with a button in which the activation of the button causes a code to be communicated through a dynamic magnetic stripe communications device (e.g., the subsequent time a read-head detector on the card detects a read-head). The code may be indicative of, for example, a feature (e.g., a payment feature). The code may be received by the card via manual input (e.g., onto buttons of the card) or via a wireless transmission (e.g., via light, electromagnetic communications, sound, or other wireless signals). A code may be communicated from a webpage (e.g., via light and/or sound) to a card. A card may include a display such that a received code may be visually displayed to a user. In doing so, the user may be provided with a way to select, and use, the code via both an in-store setting (e.g., via a magnetic stripe reader) or an online setting (e.g., by reading the code from a display and entering the code into a text box on a checkout page of an online purchase transaction). A remote server, such as a payment authorization server, may receive the code and may process a payment differently based on the code received. For example, a code may be a security code to authorize a purchase transaction. A code may provide a payment feature such that a purchase may be made with points, debit, credit, installment payments, or deferred payments via a single payment account number (e.g., a credit card number) to identify a user and a payment feature code to select the type of payment a user desires to utilize.

A dynamic magnetic stripe communications device may include a magnetic emulator that comprises an inductor (e.g., a coil). Current may be provided through this coil to create an electromagnetic field operable to communicate with the read-head of a magnetic stripe reader. The drive circuit may fluctuate the amount of current travelling through the coil such that a track of magnetic stripe data may be communicated to a read-head of a magnetic stripe reader. A switch (e.g., a transistor) may be provided to enable or disable the flow of current according to, for example, a frequency/double-frequency (F2F) encoding algorithm. In doing so, bits of data may be communicated.

A dynamic magnetic stripe communications device may be implemented on a multiple layer board (e.g., a two-layer flexible printed circuit board). A coil for each track of information that is to be communicated by the dynamic magnetic stripe communications device may then be provided by including wire segments on each layer and interconnecting the wire segments through layer interconnections to create a coil. For example, a dynamic magnetic stripe communications device may include two coils such that two tracks of information may be communicated to two different read-heads included in a read-head housing of a magnetic stripe reader. A dynamic magnetic communications device may include, for example, three coils such that three tracks of information may be communicated to three different read-heads included in a read-head housing of a magnetic stripe reader.

One or more detectors may be provided, for example, to sense the presence of an external object, such as a person or device, which in turn, may trigger the initiation of a communication sequence with the external object. The sensed presence of the external object may then be communicated to a card, which in turn may direct the exchange of information between a card and the external object. Accordingly, timing aspects of the information exchange between a card and the various I/O devices implemented on a card may also be determined by a card.

The sensed presence of the external object or device may include the type of object or device that is detected and, therefore, may then determine the type of communication that is to be used with the detected object or device. For example, a detected object may include a determination that the object is a read-head housing of a magnetic stripe reader. Such an identifying detection, for example, may activate a dynamic magnetic stripe communications device so that information is communicated (e.g., electromagnetically communicated) to the read-head of the magnetic stripe reader.

Electronics may be embedded between two layers of a polymer (e.g., a PVC or non-PVC polymer). One or more liquid polymers may be provided between these two layers. The liquid polymer(s) may, for example, be hardened via a reaction between the polymers (or other material), temperature, or via light (e.g., an ultraviolet or blue spectrum light) such that the electronics become embedded between the two layers of the polymer and a card is formed.

A payment card may receive information indicative of a game feature desired to be implemented by a user. The payment card may communicate information indicative of the game feature with payment card data associated with the card or a user selection. The payment data and game information may be routed, for example, to an authorization server. The authorization server may authorize payment and, based on the authorized payment, communicate the game information to a game server. The game server may utilize this game information to impact a game. The game information may, for example, be routed before the payment card data reaches an authorization server. At merchant settlement, charge backs for a purchase associated with a game action may cause the game action to be reversed or a different game action to be implemented (e.g., a game action that negatively affects the game for the user). The game action may be implemented at settlement upon confirmation that, for example, no chargeback was associated with the payment transaction.

A card may include one or more processors, one or more buttons, memory, and one or more displays. The processor may, for example, process information that may be associated with an incentive, award, reward and/or promotion (e.g., a coupon) and store such information within a memory of a card. Accordingly, for example, a user may provide a manual input to the card (e.g., by pressing a button) to instantly buy, redeem, or utilize a coupon that may have been communicated to a card and whose details may be displayed by a display of the card. A user may, for example, press a button on a card to purchase and redeem a coupon that may be offered for purchase. A user may, for example, cause information about the purchase and the redemption of the coupon to be provided by the display of a card after a button is pressed on the card. A user may, for example, automatically receive (e.g., via email or mobile text message) information about the purchase and the redemption of a coupon.

A cardholder may, for example, be a registered subscriber to a coupon scheme that may be offered by a coupon company. A cardholder, for example, may have agreed to allow a purchase price of a coupon generated by such a coupon promotion and distribution scheme to be automatically deducted (e.g., charged) from an account (e.g., a debit or credit account) that may be associated with the cardholder's card.

A cardholder may, for example, receive notice of a coupon offer being generated by a merchant when the cardholder's card is passed within a communication distance of a merchant's communication device (e.g., an RFID device). Coupons may, for example, be passed to one or more cards via card-to-card communications (e.g., via RFID, IR, pulsed light, or touch sensitive communications).

Alternately, a cardholder may provide manual input (e.g., press a button) to the card to obtain a notice of a coupon offer. A cardholder may enable a card (e.g., via a mobility device) to access a network (e.g., the internet) for any notices of coupon offers that may exist. The notices, for example, may be displayed on a display of the device. The cardholder may, for example, observe details associated with the coupon offer as they are displayed by the same, or different, display of the device.

A coupon may be shared via social networks and/or social games. For example, coupons may be shared (e.g., propagated amongst one or more members of a social group) via a network connection (e.g., internet or Bluetooth enabled local network). Text messaging services between one or more cards (e.g., mobile devices) may, for example, be utilized to share coupons. Social networking games may, for example, provide for propagation of coupons based upon interaction amongst its membership (e.g., games may be hosted by a coupon company where coupon distribution may be based at least in part by a quantity and/or quality of participation occurring amongst the membership of a socially networked group).

A card (e.g., a mobile device) may include sensors that may be sensitive to pulses of light. Upon receipt of a series of pulses of light, for example, the card or mobile device may interpret the pulses of light as bits of data. Such bits of data, for example, may be representative of coupon information that may be offered by a particular merchant, coupon company and/or card issuer.

Accordingly, for example, a cardholder may press his or her card against a device (e.g., a TV display or cash register monitor) at a merchant's place of business. A programming portion of the display may provide a series of light pulses that may be detected by the cardholder's card as a series of data bits that may be associated, for example, with a coupon offer from the merchant, card issuer and/or coupon company. Once the data bits are downloaded into the cardholder's card, a processor of the card may construe the data bits as a coupon message (e.g., an offer for a coupon) and display the coupon offer onto a display of the card.

A cardholder may, for example, press a button on the card in response to a coupon offer being displayed by a display of the card. Such a button press may acknowledge the cardholder's agreement to purchase the coupon. Alternatively, another button on the card may be pressed to signify the cardholder's rejection of the coupon offer.

Upon acceptance of the coupon offer, for example, a cardholder's account (e.g., debit or credit account) that may be associated with the cardholder's card may be debited for a purchase price of the coupon. The cardholder may, for example, proceed with a purchase transaction at a merchant's place of business (or from a merchant's website) and may redeem any and all discounts offered by such a coupon.

A cardholder may, for example, press a button on a card in response to a message displayed on a display of the cardholder's card. For example, prior to completion of a transaction, a merchant's point-of-sale device may communicate with a cardholder's card (e.g., via RFID, IR, pulsed light, and/or electromagnetic communications) to cause the card to display a message to the cardholder. Such a message may, for example, query the cardholder to provide permission (e.g., via a press of a button) or to decline to provide permission (e.g., via a press of another button) for an opportunity to share certain of the cardholder's information (e.g., personal, demographic, or socio-economic information) with the merchant and/or the merchant's affiliates.

After a transaction is complete, for example, a cardholder's card may be updated with transaction information. For example, a merchant's point-of-sale device may communicate coupon redemption information to the cardholder's card. A cardholder's card, for example, may be updated with information that a certain coupon has been redeemed or a partial redemption has occurred. Alternately, a cardholder's card may, for example, be updated with information that an amount of credit may be kept on the card for the next purchase at the same merchant.

A coupon company (e.g., a card issuer) may, for example, settle with a merchant for coupons honored by the merchant. An amount equal to the discount offered by the coupon, for example, may be credited back to the cardholder's account once settlement between the coupon company and the merchant completes. The amount credited back to a cardholder's account may, for example, be greater than the purchase price of the coupon. Merchants may, for example, combine the coupon purchased by the cardholder with an offer of a coupon for future purchases by that same cardholder.

Coupon companies may, for example, make coupons available for use at a merchant's place of business. Coupon companies may, for example, make coupons available for use at a merchant's place of business, but only if a minimum number of cardholders accept and purchase the coupon. For example, a group of cardholders (e.g., a socially networked group) may be incentivized to encourage one another to shop at a particular merchant in hopes of receiving a coupon offer from the merchant. Accordingly, for example, each respective cardholder may encourage one or more other cardholders to patronize a particular merchant, so as to increase the merchant's volume of potential sales, but also to increase a likelihood that each of the patronizing cardholders receive a coupon.

A coupon company (e.g., a card issuer) may, for example, provide incentives for card-based coupon holders to pool their purchases at a particular merchant's place of business or at the places of business for a group of merchants. Accordingly, for example, a group of cardholders may be further incentivized to patronize one or more merchants.

Each member of a socially networked group may, for example, be identified with a particular code or a particular bit sequence. Such a code may be communicated to a merchant's point-of-sale device, for example, as electromagnetic information (e.g., discretionary data) by a dynamic magnetic stripe communications device of a cardholder's card. A tracking system (e.g., a networked combination of a merchant's point-of-sale device, a card issuer, and a coupon company) may, for example, track each transaction that may be conducted by each member of a group (e.g., a socially networked group). After a threshold number of purchases (or purchased value) is transacted by the socially networked group, for example, the merchant may cause a coupon offer to be generated by a coupon company. Such a coupon offer may, for example, be disseminated to each member of the socially networked group in gratitude for patronage to the merchant.

A discount offered by a particular merchant may, for example, depend upon the number of cardholders that may be attracted to the merchant. Accordingly, for example, a redemption value of a coupon may depend upon a number of customers wishing to redeem such a coupon. A minimum discount may, for example, be guaranteed by the coupon company, so that patronizing cardholders may take comfort in at least a minimum discount that may be offered by the coupon company to all qualifying cardholders.

A cardholder may provide manual input (e.g., press a button) on a card to, for example, request from a merchant that a coupon be provided to the cardholder for future purchases. For example, a button press may cause additional data (e.g., discretionary data representative of a coupon request) to be generated when a dynamic magnetic stripe communications device of a card communicates to a read-head of a magnetic stripe reader during a transaction at the merchant's place of business.

Such additional data may, for example, cause a coupon offer to be generated by the merchant and provided to the cardholder at some point during or after the transaction. The merchant may alternately accumulate such coupon requests. After a minimum threshold of coupon requests are received by the merchant, for example, the coupon company may negotiate with the merchant for coupon distribution. Upon distribution of requested coupons, a cardholder recipient of the coupons may agree to redeem a minimum percentage of requested coupons over a given amount of time. A minimum percentage of requested coupons may, for example, not be redeemed within a given time period. Accordingly, for example, a non-redemption penalty may be assessed.

Coupons, for example, may be generated and distributed in physical form (e.g., paper form). Coupons, for example, may be generated and distributed in electronic form (e.g., eCoupons). Electronic distribution of eCoupons may, for example, occur in any number of electronic formats. For example, eCoupons may be distributed electronically (e.g., via email or merchant websites) to patrons who have previously registered with coupon companies. Alternately, eCoupons may be downloaded into a cardholder's card, for example, using pulses of light that may be construed by a processor on the card as eCoupon data. Electronic coupons may be transferred from card to card via, for example, touch sensitive displays and touch simulating displays of the respective cards.

Requesting, generating, distributing and/or using eCoupons may, for example, be conducted at the point of sale. A cardholder may press a button on his or her card, for example, to communicate information (e.g., electromagnetic information) that indicates the cardholder's desire to receive a coupon. The transaction may, for example, qualify the patron to receive a coupon (e.g., the coupon request may represent the last of a minimum number of coupon requests required to qualify patrons to receive qualified coupons).

Such a qualification, for example, may be signaled to the merchant conducting the transaction via the merchant's point-of-sale terminal. Once qualified, a cardholder may press his or her card against the merchant's point-of-sale terminal to receive data indicative of the coupon (e.g., the point-of-sale terminal may communicate data via a series of light pulses that may be received and construed by a processor on the card as coupon data).

A cardholder may, for example, request a coupon from a merchant other than the merchant conducting the transaction. For example, a cardholder may request a coupon from a merchant in the same or similar category as the transacting merchant. For example, a cardholder purchasing gas from a gas station may request a coupon from the gas station for a discounted oil change to be used in the future at a different merchant's place of business.

A card may, for example, collect and store one or more coupons for future use. One or more buttons on a card may be used, for example, to request redemption of the corresponding one or more coupons that may be stored within the card. A single button, for example, may be pressed any number of times to cycle through a list of coupons that may be stored within the card. A display of the card, for example, may be used to display indicia associated with each coupon that may be stored within the card. A second display of the card, for example, may be used to display details associated with each coupon that may be stored within the card.

Coupons may, for example, have expiration dates associated with them. Accordingly, for example, a processor of a card may track each expiration date of each coupon stored within a card and may purge an expired coupon from a card's memory. Additionally, a card's display may provide indicia to a user of the card that one or more coupons are scheduled to expire, thereby prompting the cardholder to make use of the one or more coupons before they are no longer valid for use.

Coupon usage may, for example, result in an instantaneous credit to the cardholder. For example, a merchant transaction system may intercept a payment authorization message to effect an instantaneous discount on the purchase price at the point of sale. Alternately, for example, a batch process settlement may be implemented with a coupon company on a deferred basis, whereby the cardholder may receive a credit on the cardholder's next account statement.

A powered card, such as a powered payment card, or other device may include a button associated with a deal of the day. A user may receive information directly to the card, or via another device, indicative of that deal of the day. For example, a user may receive on a mobile telephonic device or card a text message, email, or information update on an application indicative of a deal of the day. A deal of the day may be a particular discount at a particular merchant, group of merchants, and/or type of merchant. The discount may be for a particular type of purchase (e.g., the purchase of a particular item or service). A user may make an in-store purchase covered by the deal-of-the-day. At checkout, the user may select an option on the card, or other device, indicative of the user's desire to obtain the deal of the day.

Information associated with the selection may be communicated to a card reader. For example, information indicative of the selection may be included in the magnetic stripe data provided by a dynamic magnetic stripe communication device on the card. As per another example, information indicative of the selection may be included in RF data provided by an RFID antenna on a mobile telephonic phone to an RF card reader.

Processing may receive and process the data to determine the user was desirous of utilizing the deal of the day feature. In doing so, the user may be provided with the deal and the transaction may be processed in accordance with the parameters of the deal. The processing may also determine if all, or part of, the transaction qualifies for the deal of the day.

A deal of the day may be valid, for example, for a period of time (e.g., approximately 20-52 hours). A deal of the day may be changed periodically (e.g., every day). Multiple deals of the day may be provided so that a user includes larger deal of the day opportunities. For example, different deals of the day may be provided for different merchant types. For example, one gas station may have a deal of the day one day while another gas station may have a deal of the day another day.

The location within which a user resides may be utilized to determine the deal of the day for that user. The location of a user's last or previous purchase may also be utilized, at least in part, to determine a future deal of the day.

A user may utilize a web browser to visit a site and may, on that site, select, each day, a deal of the day to associate with his/her card or device. Accordingly, a user may be provided with multiple deals of the day and may, each day, select one deal of the day. These various deals of the day may change periodically. The user may also select a deal of the day from multiple deals of the day by pressing a button on a card, or other device, and uploading information from that card, or device. Such information may be communicated, for example, from a mobile telephonic chip and antenna provided in the device.

A deal of the day may be a one-time-use deal of the day or a multiple-time-use deal of the day. A cost may be associated with utilizing a deal of the day. A deal of the day may be processed at authorization or at settlement. A deal of the day may be applied to a transaction after the transaction has settled. For example, a deal of the day may be processed by a card issuer (e.g., credit card issuer) after that credit card transaction is settled and hits the user's credit card statement.

The card issuer may then, in turn, obtain payment from the provider of the deal of the day service or the merchant that received the deal of the day. The deal of the day service provider may, in turn, for example, then charge an amount to the merchant.

A check-in option may, for example, be selected on a card or other device (e.g., a mobile telephonic device) to communicate information to a merchant terminal indicative of a user's desire to check-in at that merchant location during, for example, a purchase transaction (e.g., via magnetic stripe data, RFID data, or other financial transaction data). A user's desire to check-in at a merchant location may be provided to a remote server. A remote server may utilize received check-in data to provide a third party service such as, for example, an online social game or online social information site. Accordingly, the third party service may utilize a user's desire to check-in at a particular merchant location as part of an online game or information service. In this manner, a user may check-in at a location without having to do anything other than purchase an item at that location.

A consumer utilizing a check-in feature may be identified by a remote server in a variety of ways. For example, a user may press a check-in button on a payment card and information indicative of a user's desire to check-in at the merchant location may be communicated with a payment message from the card to a card reader. This payment message may include, for example, a payment card account number and associated discretionary data. A remote server, such as a remote server from a card issuer, may utilize the payment account number to identify the user, authorize the purchase transaction, and route information of a user's desire to check-in to a check-in service.

The identity of the consumer may also be communicated to the check-in service. For example, the account number may be communicated or, for example, the card issuer may utilize the account number to retrieve other identification information and send this other identification information to the check-in service. The check-in service may then, for example, utilize the consumers identity and check-in information. For example, a social information site may have a profile of that consumer and may list the various locations and times that the users have checked into a merchant location. The card issuer may also determine the merchant location or provide information received about the merchant to the check-in service provider. In doing so, the check-in service provider may determine the merchant location. Alternatively, for example, the card or other device may include additional consumer identification information and this information may be provided to a card reader during a transaction (e.g., the information may be included in discretionary magnetic stripe data).

A merchant location may be, for example, a general type of store (e.g., gas station), a name of a merchant (e.g., Walmart), the specific name of a store and general location of the store (e.g., Walmart, PA), or the location of a store (e.g., Walmart, Robinson Town Center, Pittsburgh, PA). Multiple check-in options may be provided on a card, or other device. For example, a card or other device may include the option to check-in at the merchant or check-in at the merchant and complete a purchase transaction. Accordingly, a remote server may indicate that a particular consumer is at a particular merchant location if the check-in is for the merchant. The remote server may also indicate that the particular consumer made a purchase and the total amount of the purchase (e.g., $98.50) if the check-in is for the merchant and the purchase.

A merchant terminal may, for example, collect information from a card (e.g., cardholder information) and may combine merchant information with the information received from the card. The combined information may, for example, be provided to a routing server. The routing server may, for example, provide the combined information to a network. Network entities on the network may, for example, receive, accumulate, and manipulate the combined information in support of consumer tracking activities that may be conducted by the network entities.

A card may, for example, provide one or more check-in options that may allow a cardholder to select a level of information exchange that may be desired by the cardholder. For example, a user may not activate a check-in option at all if that user does not wish to share cardholder information with a merchant terminal during, for example, a point-of-sale transaction. Cardholder information may be, for example, stored on a remote server and utilized if a cardholder desires that information to be utilized as a result of a purchase transaction according to any preferences that cardholder desires at the time of the purchase transaction.

A user may, for example, activate a check-in option that allows a user to provide cardholder information to a merchant terminal without conducting a point-of-sale transaction. A user may, for example, activate a check-in option that allows a user to provide cardholder information to a merchant terminal in addition to financial information that may be required in support of a point-of-sale transaction.

A user may, for example, activate a check-in option that allows a cardholder to provide cardholder emotion during a point-of-sale transaction. For example, a user may activate a "like" emotion during a point-of-sale transaction that allows the user to express that he or she particularly likes a purchase. A user may, for example, activate a check-in option that allows a cardholder to share information with an expanded audience (e.g., a user may direct cardholder information to a predetermined audience).

Information may, for example, be collected from one or more cardholders that exercise a check-in option. For example, an entity (e.g., a website) may collect information associated with one or more cardholders that may be provided during point-of-sale transactions that include the communication of cardholder information during the transaction. Accordingly, for example, a website may track purchasing statistics of one or more cardholders and make those statistics available to interested parties (e.g., merchants and other commercial entities).

Gaming activities may be supported. For example, members of a social network may participate in gaming activities, whereby points may be awarded based upon the check-in activity of each participant. A certain number of points may, for example, be awarded to a participant each time that participant selects a check-in option at the point of sale. An increased number of points, for example, may be awarded to a participant that increases an amount of information shared during a point-of-sale transaction (e.g., whether or not the participant particularly liked the purchase). A participant may, for example, select an option to redeem points awarded during gaming activities at the point-of-sale terminal.

### Brief Description of the Drawings

The principles and advantages of the present invention can be more clearly understood from the following detailed description considered in conjunction with the following drawings, in which the same reference numerals denote the same structural elements throughout, and in which:
FIG. 1 is an illustration of cards constructed in accordance with the principles of the present invention;
FIG. 2 is an illustration of a card constructed in accordance with the principles of the present invention;
FIG. 3 is an illustration of a card constructed in accordance with the principles of the present invention;
FIG. 4 is an illustration of a card constructed in accordance with the principles of the present invention;
FIG. 5 is an illustration of a device constructed in accordance with the principles of the present invention;
FIG. 6 is an illustration of a card constructed in accordance with the principles of the present invention;
FIG. 7 is an illustration of a card constructed in accordance with the principles of the present invention;
FIG. 8 is an illustration of a graphical user interface constructed in accordance with the principles of the present invention;
FIG. 9 is an illustration of a graphical user interface constructed in accordance with the principles of the present invention;
FIG. 10 is an illustration of a card constructed in accordance with the principles of the present invention;
FIG. 11 is an illustration of a card constructed in accordance with the principles of the present invention;
FIG. 12 is an illustration of a card constructed in accordance with the principles of the present invention;
FIG. 13 is an illustration of a system constructed in accordance with the principles of the present invention;
FIG. 14 is an illustration of a card constructed in accordance with the principles of the present invention;
FIG. 15 is an illustration of a card constructed in accordance with the principles of the present invention;
FIG. 16 is an illustration of a process flow chart constructed in accordance with the principles of the present invention;
FIG. 17 is an illustration of a process flow chart constructed in accordance with the principles of the present invention;
FIG. 18 is an illustration of a process flow chart constructed in accordance with the principles of the present invention;
FIG. 19 is an illustration of a card constructed in accordance with the principles of the present invention;
FIG. 20 is an illustration of a mobile device constructed in accordance with the principles of the present invention;
FIG. 21 is an illustration of a card constructed in accordance with the principles of the present invention;
FIG. 22 is an illustration of a card constructed in accordance with the principles of the present invention;
FIG. 23 is an illustration of a system constructed in accordance with the principles of the present invention;
FIG. 24 is an illustration of a website constructed in accordance with the principles of the present invention;
FIG. 25 is an illustration of a website constructed in accordance with the principles of the present invention;
FIG. 26 is an illustration of a website constructed in accordance with the principles of the present invention;
FIG. 27 is an illustration of a mobile device constructed in accordance with the principles of the present invention; and
FIG. 28 is an illustration of a process flow chart constructed in accordance with the principles of the present invention.

### Detailed Description of the Invention

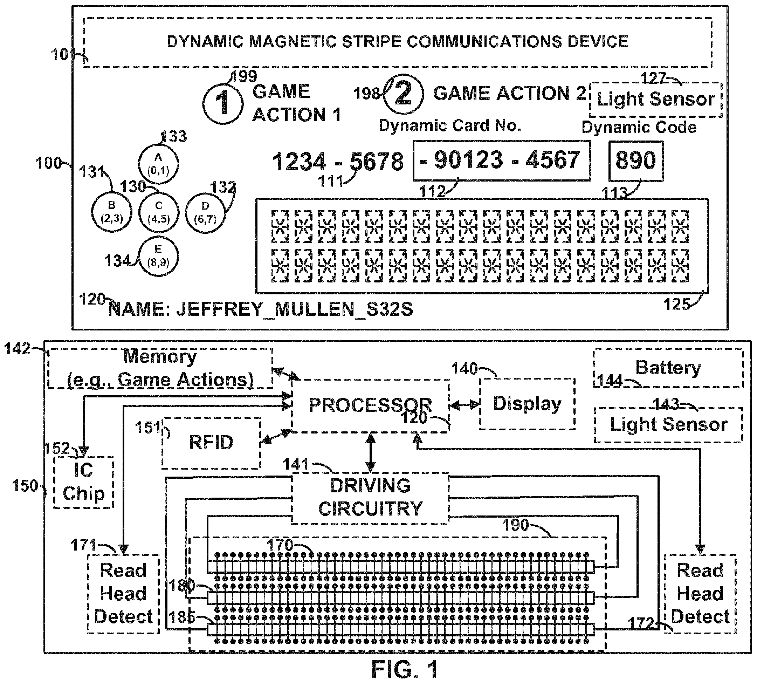

FIG. 1 shows card 100 that may include, for example, a dynamic number that may be entirely, or partially, displayed via display 112. A dynamic number may include a permanent portion such as, for example, permanent portion 111. Permanent portion 111 may be printed as well as embossed or laser etched on card 100. Multiple displays may be provided on a card. For example, display 113 may be utilized to display a dynamic code such as a dynamic security code. Display 125 may also be provided to display logos, barcodes, as well as multiple lines of information. A display may be a bi-stable display or non bi-stable display. Permanent information 120 may also be included and may include information such as information specific to a user (e.g., a user's name or username) or information specific to a card (e.g., a card issue date and/or a card expiration date). Card 100 may include one or more buttons such as buttons 130-134. Such buttons may be mechanical buttons, capacitive buttons, or a combination or mechanical and capacitive buttons. Card 100 may include button 199. Button 199 may be used, for example, to communicate information through dynamic magnetic stripe communications device 101 indicative of a user's desire to communicate a single track of magnetic stripe information. Persons skilled in the art will appreciate that pressing a button (e.g., button 199) may cause information to be communicated through device 101 when an associated read-head detector detects the presence of a read-head of a magnetic stripe reader. Button 198 may be utilized to communicate (e.g., after button 198 is pressed and after a read-head detects a read-head of a reader) information indicative of a user selection (e.g., to communicate two tracks of magnetic stripe data). Multiple buttons may be provided on a card and each button may be associated with a different user selection. Light sensor 127 may be provided, for example, to receive information from a display (e.g., a display of a mobile telephonic device or a laptop computer). Display 125 may allow a user to select (e.g., via buttons) options on the display that instruct the card to communicate (e.g., via a dynamic magnetic stripe communications device, RFID, or exposed IC chip) to use a debit account, credit account, pre-paid account, or point account for a payment transaction. Button 198 and button 199 may each be associated with, for example, a different game action and/or a different virtual game currency. For example, suppose a game is an online multiplayer farming game that is integrated in a social networking website. One action may be, for example, to harvest crops. Another action may be, for example, to harvest animals. Yet another action may be, for example, to feed pets. Such a game may be, for example, a game played on a gaming device and/or a game played online. In such a game, for example, no universal harvesting or feeding feature may be provided in the underlying game except for those harvesting features selectable with purchases. Thus, for example, the underlying console or online game may only have options for individual plant or individual animal harvesting. Accordingly, a user may conserve time by performing such large-scale game actions as a benefit to making a payment with a particular brand of card. In doing so, for example, a user may obtain a unique game action by making a purchase that the user cannot obtain in the underlying game played online or on a gaming device. Additionally, for example, game actions may be performed for free with a payment transaction that may otherwise be performed at a cost if performed in the game. In doing so, for example, a user may obtain a game action at a different cost if the user selects the game action to be performed with a purchase transaction than if the user performs the game action outside of a purchase transaction (e.g., while playing the game online and/or on a gaming device). For example, a user may be provided with a button to obtain a virtual object (e.g., a mystery virtual object that is randomly selected) with the purchase. The value of the virtual object may correspond, for example, to a fixed amount or an amount dependent on the purchase amount. Such virtual goods may carry a cost in the game such that the benefit for using a card with such a feature may be to obtain a virtual good for a game at a different, or no, cost.

Persons skilled in the art will appreciate that a physical payment card may be provided as a virtual payment card on a display of any device, such as a mobile telephonic device or personal computing device. A button on a physical payment card may be a button on any device, such as a mobile telephonic device or personal computing device. Accordingly, for example, a device (e.g., a cell phone) may receive manual input from a manual user interface (e.g., a virtual button on a capacitive touch screen) and communicate information indicative of the selection (e.g., a selection of a game action) to another device (e.g., a payment terminal such as a card reader) via a communications device (e.g., an RF-based communications device).

Persons skilled in the art will appreciate that a physical payment card may be provided as a virtual payment card on a display of any device, such as a mobile telephonic device or personal computing device. A button on a physical payment card may be a button on any device, such as a mobile telephonic device or personal computing device. Accordingly, for example, a device (e.g., a cell phone) may receive manual input from a manual user interface (e.g., a virtual button on a capacitive touch screen) and communicate information indicative of the selection (e.g., a game action) to another device (e.g., a payment terminal such as a card reader) via a communications device (e.g., an RF-based communications device).

Architecture 150 may be utilized with any card. Architecture 150 may include processor 120. Processor 120 may have on-board memory for storing information (e.g., game actions). Any number of components may communicate to processor 120 and/or receive communications from processor 120. For example, one or more displays (e.g., display 140) may be coupled to processor 120. Persons skilled in the art will appreciate that components may be placed between particular components and processor 120. For example, a display driver circuit may be coupled between display 140 and processor 120. Memory 142 may be coupled to processor 120. Memory 142 may include data that is unique to a particular card. For example, memory 142 may store discretionary data codes associated with buttons of a card (e.g., card 100 of FIG. 1). Such codes may be recognized by remote servers to effect particular actions. For example, a code may be stored in memory 142 that causes a game action to be performed by a remote server (e.g., a remote server coupled to a game such as an online game). Each game feature may be associated with a button. Or, for example, a user may scroll through a list of promotions on a display on the front of the card (e.g., using buttons to scroll through the list). A user may select the type of payment on card 100 via manual input interfaces corresponding to displayed options on display 125. Selected information may be communicated to a magnetic stripe reader via a dynamic magnetic stripe communications device. Selected information may also be communicated to a device (e.g., a mobile telephonic device) having a capacitive sensor or other type of touch sensitive sensor.

Card 100 may include, for example, any number of light sensors 127. Light sensors 127 may be utilized such that a display screen, or other light emitting device, may communicate information to light sensors 127 via light.

Any number of reader communication devices may be included in architecture 150. For example, IC chip 152 may be included to communicate information to an IC chip reader. IC chip 152 may be, for example, an EMV chip. As per another example, RFID 151 may be included to communicate information to an RFID reader. A magnetic stripe communications device may also be included to communicate information to a magnetic stripe reader. Such a magnetic stripe communications device may provide electromagnetic signals to a magnetic stripe reader. Different electromagnetic signals may be communicated to a magnetic stripe reader to provide different tracks of data. For example, electromagnetic field generators 170, 180, and 185 may be included to communicate separate tracks of information to a magnetic stripe reader. Such electromagnetic field generators may include a coil wrapped around one or more materials (e.g., a soft-magnetic material and a non-magnetic material). Each electromagnetic field generator may communicate information serially to a receiver of a magnetic stripe reader for a particular magnetic stripe track. Read-head detectors 171 and 172 may be utilized to sense the presence of a magnetic stripe reader (e.g., a read-head housing of a magnetic stripe reader). This sensed information may be communicated to processor 120 to cause processor 120 to communicate information serially from electromagnetic generators 170, 180, and 185 to magnetic stripe track receivers in a read-head housing of a magnetic stripe reader. Accordingly, a magnetic stripe communications device may change the information communicated to a magnetic stripe reader at any time. Processor 120 may, for example, communicate user-specific and card-specific information through RFID 151, IC chip 152, and electromagnetic generators 170, 180, and 185 to card readers coupled to remote information processing servers (e.g., purchase authorization servers). Driving circuitry 141 may be utilized by processor 120, for example, to control electromagnetic generators 170, 180, and 185.

Architecture 150 may also include, for example, light sensor 143. Architecture 150 may receive information from light sensor 143. Processor 120 may determine information received by light sensor 143.

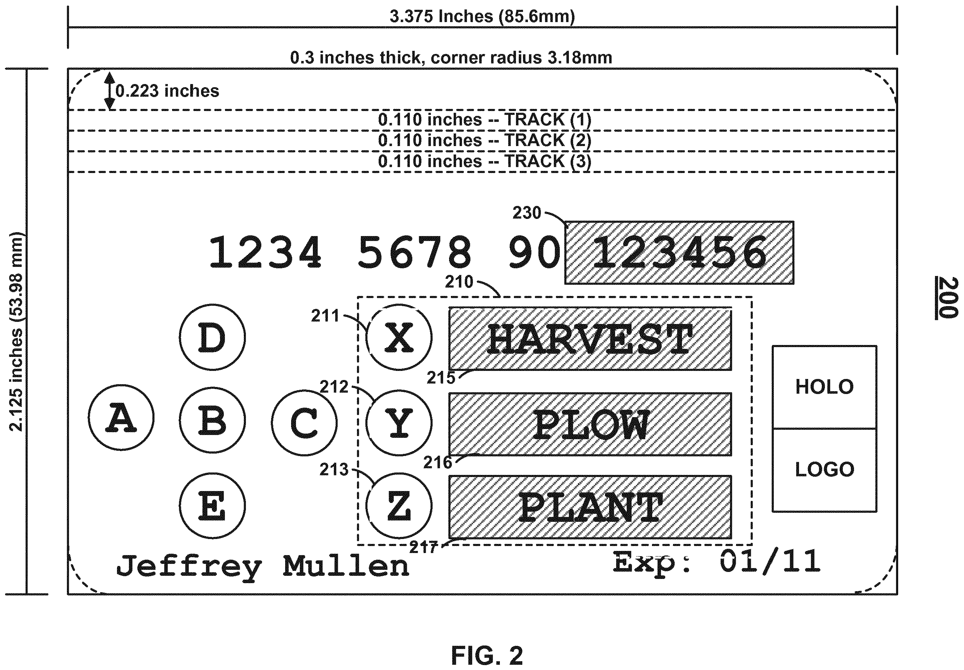

FIG. 2 shows card 200 that may include, for example, display 230 and interface 210. Interface 210 may include, for example, displays 215, 216, and 217 as well as buttons 211, 212, and 213. Display 215 may be associated with button 211. Display 216 may be associated with button 212. Display 217 may be associated with button 213. Display 230 may be utilized to display, for example, all or a portion of one or more payment card numbers such as a credit card number, debit card number, gift card number, pre-paid card number, loyalty card number, and/or any other card number. A card may be issued with a pre-determined set of actions associated with buttons 211-213. Such actions may correspond to game actions that control a portion of a video game. A user may, at the time of applying for a payment card, select a particular card for a particular game and also select the particular game actions for that card. Information associated with the game action for a button may be displayed on a display in the proximity of that button. Information associated with the game action for a button may also be permanently provided on the card in the proximity of a button. Such permanent indicia may take the form of printed indicia, embossed indicia, and/or engraved indicia. A user may change the game actions for particular buttons online (e.g., via a website associated with a card issuer or a game provider). Such a change may be implemented, for example, on backend systems. Accordingly, for example, a remote server may change the way it uses different messages received from the card. In doing so, a user may change game actions without having to change the operation of a card. Such a change may be implemented, for example, on the card. For example, a card may receive information wirelessly (e.g., via light and/or sound) indicative of a desire to change the game actions for a particular button. Accordingly, the card may reconfigure the uses of each button, display different information, and communicate different information when a particular button is selected. Such re-configuration instructions may be communicated manually to a card (e.g., via a code manually entered into buttons on the card). For example, each button of card 200 may be associated with a game action for a different game from a game provider. A user may change game preferences and, as a result, may want to add, remove, or modify a game action. In reconfiguring the card or the backend, the user may, for example, add a game action for a game that was released after card 200 was issued to the user.

Game actions may take many forms. For example, an online farming video game may provide in-game actions. The same, or different actions, may be performed via a server receiving an instruction provided by a card to a card reader during a payment transaction. Particularly, information corresponding to a particular game action may be communicated by a card to a card reader. This information may be provided to a gaming server such that the game action may be implemented. Such a game action may be, for example, to harvest all crops, plow all fields, or plant the crops with a pre-determined, unique, or randomly chosen seed.

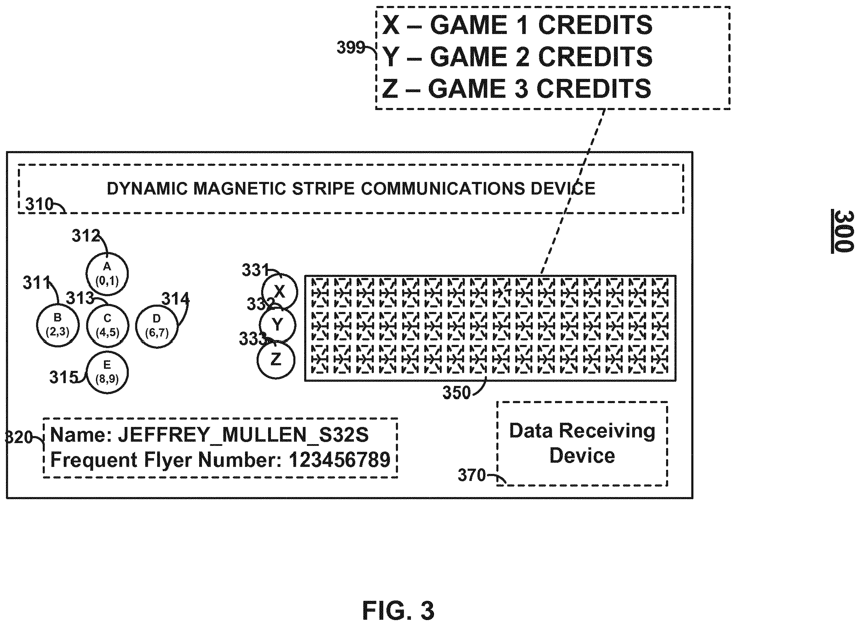

FIG. 3 shows card 300. Card 300 may include buttons 311-315, display 350, data receiving device 370, permanent information 320, and dynamic magnetic stripe communications device 310. Display 350 may include a graphical user interface such as interface 399. In graphical user interface 399, three options are provided. A user may select an option before selecting a button that corresponds to that option. Each option may be the ability for a user to earn a different virtual currency as a reward for making a purchase. The amount of virtual currency earned may be, for example, a pre-determined amount or an amount based on a formula that includes, for example, the purchase amount. A user may change the virtual currency selections on a card at any time, for example, by entering a code or receiving information from device 370 (e.g., via light from an internet browser). Accordingly, as the habit of a gamer changes, the gamer may, for example, change his/her currency reward options for a card. The virtual currency reward options may be associated with the same game and/or different games.

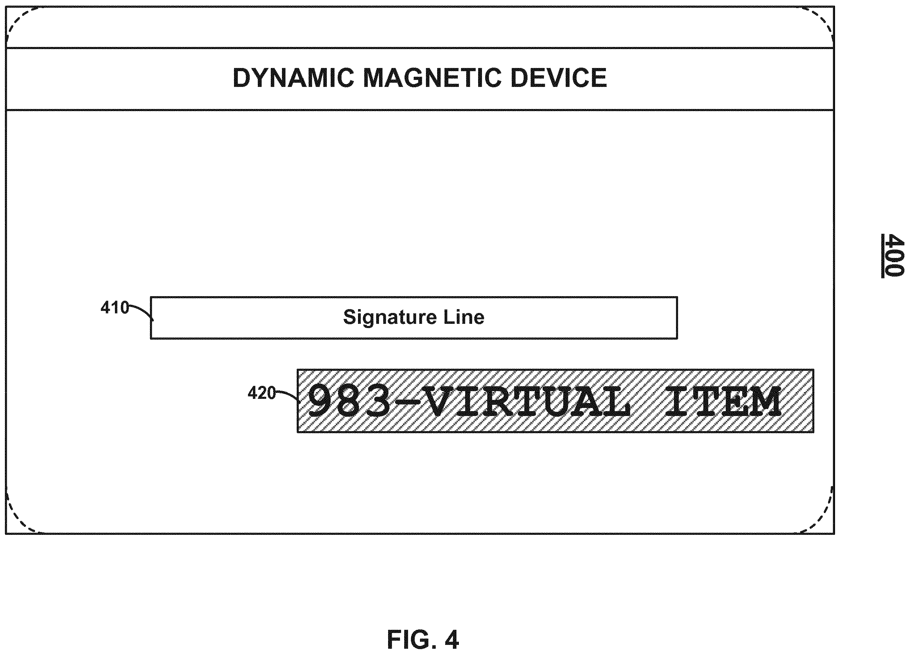

FIG. 4 shows card 400 that may include signature line 410 and display 420. A code may be provided on display 420 indicative of a particular game action. The code may be entered in a security code. For example, a user may press a button associated with getting a virtual item with his/her purchase. Such a button may be provided on the obverse side of a card. The reverse side of the card may then display a security code that is indicative of the desire for a user to acquire a virtual item with a purchase as well as be used to help authenticate the transaction. Accordingly, a user may obtain the benefits of game actions while making online purchases via the use of dynamic security codes representative of security information and game actions.

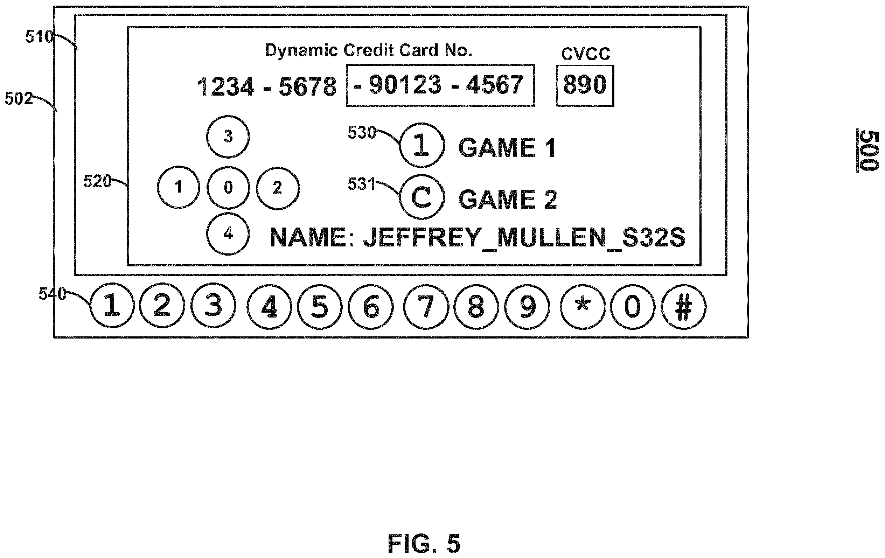

FIG. 5 shows device 500 that may include housing 502, display 510, virtual card 520, physical buttons 540, and virtual buttons 530 and 531. Device 500 may be, for example, a mobile telephonic device or other device. Display 510 may be a touch-sensitive display. Person skilled in the art will appreciate that any physical card provided herein may be provided as a virtual card on a mobile telephonic device. Physical buttons may, for example, correspond to virtual buttons. Device 500 may communicate information to a card reader, for example, via a contactless (e.g., an RFID signal) or contact-based signal (e.g., a USB connection). For example, virtual button 530 may correspond to a game action in one game while virtual button 531 may correspond to a game action in a different game.

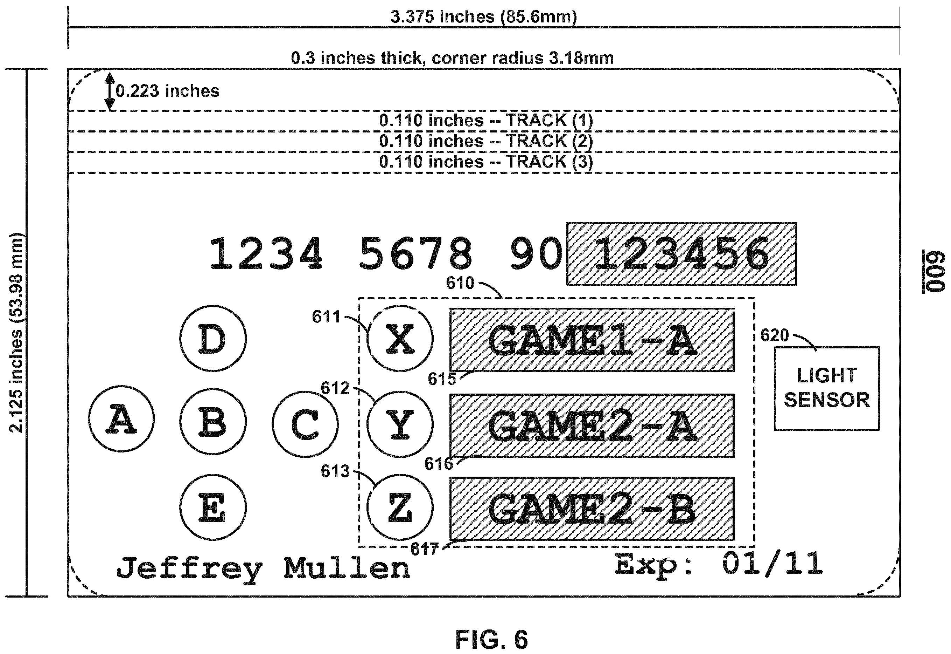

FIG. 6 shows card 600 that may include interface 610, buttons 611-613, displays 615-617, and light sensor 620. Displays 615-617 may correspond to buttons 611-613, respectively. Button 611 may be associated with a game action on a first game. Button 612 may be associated with a game action on a second game. Button 613 may be associated with a second game action on that second game. Persons skilled in the art will appreciate that game action descriptions may be generic words or letters such that, for example, a user may go online via an internet browser and change the functionality performed when particular information is received from the card without having to change the card itself. Accordingly, for example, whenever a user logs into an online video game the user may be provided with the actions that each payment card button performs and allow the user to change the functionality of these buttons as the game progresses. Accordingly, information may be received from a user's game session and used to update the implementation of the card's functionality as data is received, for example, through payment card readers at merchant locations. Promotions may be provided in this manner as particular merchants may provide unique game actions. A game that includes virtual versions of retail stores may, for example, provide different actions that provide in-game discounts on virtual goods from those virtual stores when physical purchases are made at physical locations. Accordingly, a user may enter a virtual merchant location in a game and assign a particular game functionality associated with that merchant to the user's card.

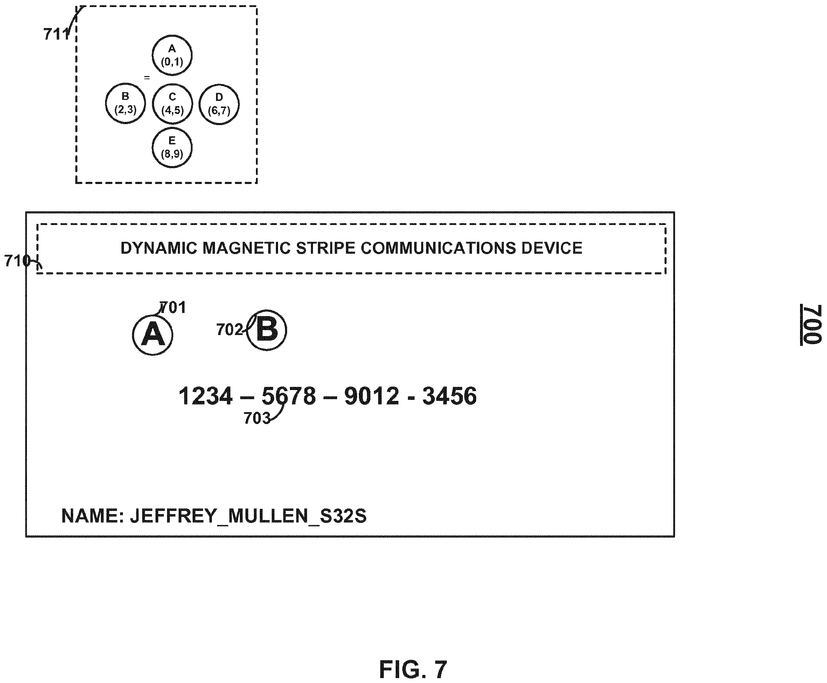

FIG. 7 shows card 700 that may include, for example, button 701, button 702, permanent information 703, and dynamic magnetic stripe communications device 710. Button array 711 may, for example, be implemented to receive information from a user such as codes to enable the card to operate or re-configure the operation of the card. Buttons 701 and 702 may be associated with permanently printed information. Such printing may be indicative of a letter (e.g., "A" or "B") or a general word (e.g., "Attack" and "Block"). Accordingly, a standard card format may be provided to multiple users and such users may be able to easily assign game actions to particular buttons on a card and be able to easily remember the actions associated with the buttons. For example, the letter "A" may be associated with button 701 and the letter "B" may be associated with button 702. A user may be provided with a list of game options to select for button 701 that start with the letter "A" (e.g., "Attack," "Action," or "Amplify"). A user may be provided with a list of game options to select for button 702 that start with the letter "B" (e.g., "Block," "Buy," or "Bomb").

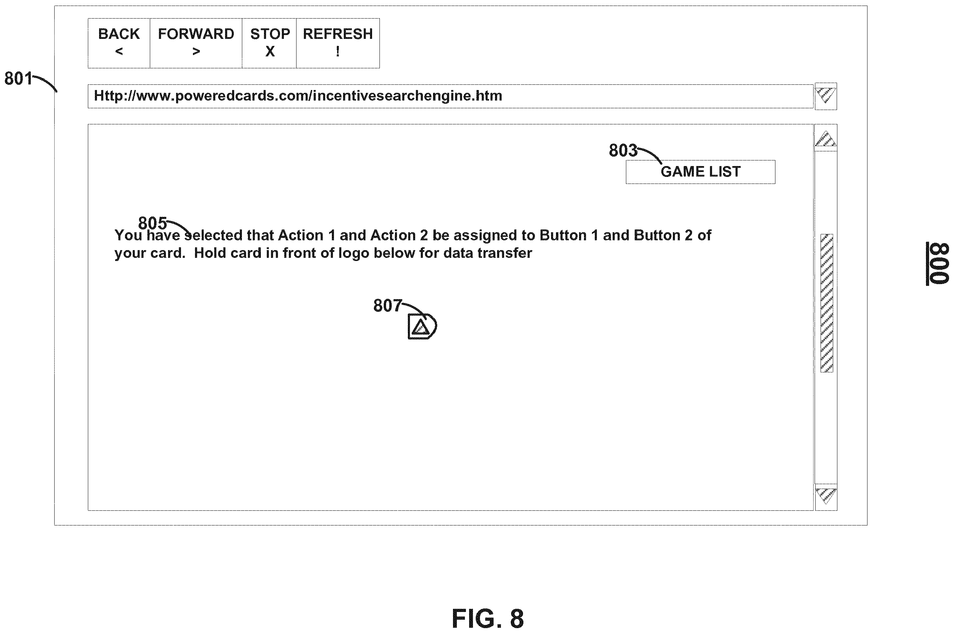

FIG. 8 shows graphical user interface 800. Graphical user interface 800 may be, for example, an internet browser display of a video game providers' website for an online video game provider, a social network running a video game providers online video game, a card issuer, a card network, or any other website. A user may, using graphical user interface 800, select actions for a card and communicate corresponding configuration information to a card via, for example, light box 807. Light box 807 may communicate pulses of light indicative of configuration information to one or more light sensors on a card. A user's configuration, for example, may also be executed on the backend such that no information is communicated to the card to change the functionality of the card as a payment is processed.

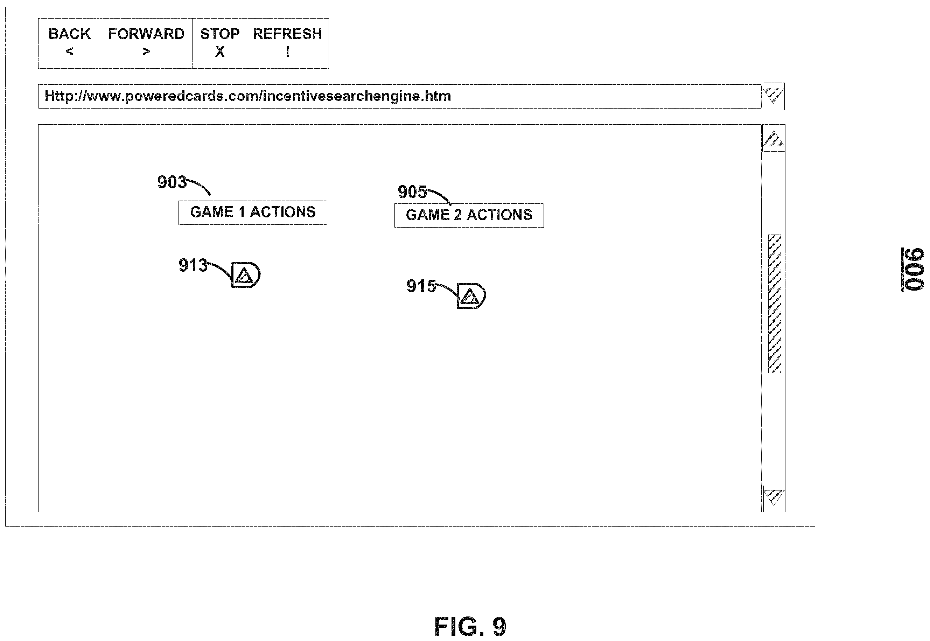

FIG. 9 shows graphical user interface 900. Virtual button 903 may correspond to a device configuration for one game while virtual button 905 may correspond to a device configuration for a different game. Activating virtual button 903 may cause light box 913 to communicate information. Activating virtual button 905 may cause light box 915 to communicate information.

Persons skilled in the art will appreciate that game actions may include, for example, earning game currency, earning unique tools, weaponry, property, unlock a new level, advancing to a new level, earning experience points, earning a discount for in-game purchases, or any other virtual good or benefit having value within the game. A card may have any number of buttons. For example, a card may have four buttons, each associated with a game action in a different game that may provide a user with a game advantage in that game. Cards may be linked in groups. For example, groups of gamers that compete in a game together (e.g., a grandmother, grandson group) may earn awards for all users of that group. Accordingly, a grandmother making purchases may earn game actions for both herself and her grandson. Similarly, a grandson may utilize a payment card (or other card) to earn game actions for both himself and his grandmother. Additionally, linked cards may provide game actions for a selected user. For example, the grandmother's card may include a button for providing a game action to herself or to provide a game action for a particular user in her group (or the rest of the users in her group). Accordingly, a user may decide who to provide the game advantage to at the point of sale. A game gift provided to another user may, for example, be displayed on the game such that the receiving user is required to acknowledge receipt of the game gift before using the game gift.

Game actions in the game may be utilized to achieve promotions for a card. For example, unlocking a particular level of a game or succeeding in a particular aspect of the game may cause the game to provide a particular unlocking code. Such an unlocking code may allow the card to offer new functionality to the purchaser. Similarly, the functionality may be implemented on the back-end such that a user may not need to interact with a card to achieve the enhanced functionality. Similarly, promotions, statement credits, and/or discounts, for example, may be earned for achievements obtained while playing a game on a game provider's website or game console systems that are provided to a card issuer's website for a user to utilize. Accordingly, for example, the interaction between a gamer and the card issuer may be increased. A button may also be provided that allows a user to spend virtual game currency in a store. Accordingly, a user may purchase a large amount of game currency and may press a button such that the card issuer settles the payment, but is reimbursed by the game provider. In turn, for example, the game provider would redeem virtual currency for real currency based on a conversion formula. Such a conversion formula may include a conversion fee. Additionally, as more purchases are made and/or the total amount of purchase increases (e.g., total annual amount), additional features may be provided to the card and/or game. New codes may be provided to configure the card or, for example, more user selections on how to configure the card on the backend may be provided. Accordingly, a user spending more money with a card may be provided with game actions of higher value than a user that spends less money with a card.

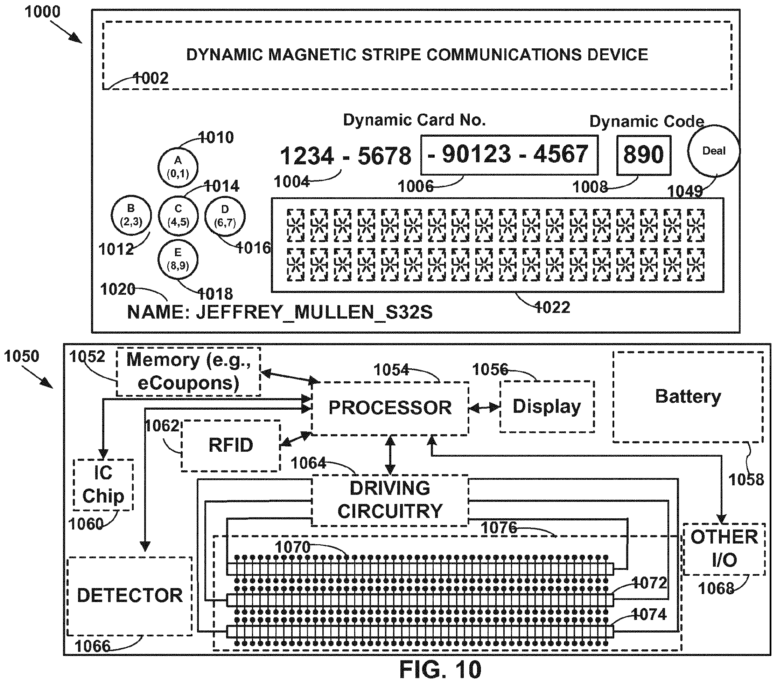

FIG. 10 shows card 1000 that may include, for example, a dynamic number that may be entirely, or partially, displayed using a display (e.g., display 1006). A dynamic number may include a permanent portion such as, for example, permanent portion 1004 and a dynamic portion such as, for example, dynamic portion 1006. Card 1000 may include a dynamic number having permanent portion 1004 and permanent portion 1004 may be incorporated on card 1000 so as to be visible to an observer of card 1000. For example, labeling techniques, such as printing, embossing, laser etching, etc., may be utilized to visibly implement permanent portion 1004.

Card 1000 may include a second dynamic number that may be entirely, or partially, displayed via a second display (e.g., display 1008). Display 1008 may be utilized, for example, to display a dynamic code such as a dynamic security code. Card 1000 may also include third display 1022 that may be used to display graphical information, such as logos and barcodes. Third display 1022 may also be utilized to display multiple rows and/or columns of textual and/or graphical information. For example, display 1022 may be utilized to display information that is indicative of data (e.g., eCoupon data) that may be stored within a memory of card 1000.

Persons skilled in the art will appreciate that any one or more of displays 1006, 1008, and/or 1022 may be implemented as a bi-stable display. For example, information provided on displays 1006, 1008, and/or 1022 may be stable in at least two different states (e.g., a powered-on state and a powered-off state). Any one or more of displays 1006, 1008, and/or 1022 may be implemented as a non-bi-stable display. For example, the display is stable in response to operational power that is applied to the non-bi-stable display. Other display types, such as LCD or electrochromic, may be provided as well.

Other permanent information, such as permanent information 1020, may be included within card 1000, which may include user specific information, such as the cardholder's name or username. Permanent information 1020 may, for example, include information that is specific to card 1000 (e.g., a card issue date and/or a card expiration date). Information 1020 may represent, for example, information that includes information that is both specific to the cardholder, as well as information that is specific to card 1000.

Card 1000 may accept user input data via any one or more data input devices, such as buttons 1010-1018. Buttons 1010-1018 may be included to accept data entry through mechanical distortion, contact, or proximity. Buttons 1010-1018 may be responsive to, for example, induced changes and/or deviations in light intensity, pressure magnitude, or electric and/or magnetic field strength. Such information exchange may then be determined and processed by a processor of card 1000 as data input.

For example, one or more buttons 1010-1018 may be activated to display indicia on a display (e.g., display 1022) that may be associated with one or more corresponding eCoupons that may be stored within a memory of card 1000. Alternately, for example, a single button (e.g., button 1010) may be pressed multiple times to sequentially display data that may be associated with one or more eCoupons. Other buttons, for example, may be pressed to obtain details about each eCoupon that may be stored within a memory of card 1000. Persons skilled in the art will appreciate that eCoupons may represent any promotion, incentive, award, and/or reward that may be offered by any merchant and/or any coupon company.

Button 1049 may be provided and may be associated with, for example, a deal of a day feature. Periodically (e.g., every day), a user may be provided with a different deal of the day. The user may determine the deal of the day by, for example, receiving an update to his/her mobile telephonic device and/or card. The user may also log into a website that may provide the user with the user's deal of the day. The user may press button 1049 to utilize the deal of the day. The deal of the day, for example, may be utilized at any merchant, a particular merchant, a particular type of merchant, or a particular group of merchants. For example, a deal of the day may be to purchase a particular item at a particular merchant for a particular price. As per another example, a deal of the day may be to add a cost of $1 to any order online to receive free insurance on that item where the insurance would otherwise cost more than $1. Information indicative of a user's desire to utilize a deal of a day may be, for example, communicated from a card or other device (e.g., a mobile telephonic device) to a card reader and/or a remote server.

Persons skilled in the art will appreciate that a physical payment card may be provided as a virtual payment card on a display of any device, such as a mobile telephonic device or personal computing device. A button on a physical payment card may be a button on any device, such as a mobile telephonic device or personal computing device. Accordingly, for example, a device (e.g., a cell phone) may receive manual input from a manual user interface (e.g., a virtual button on a capacitive touch screen) and communicate information indicative of the selection (e.g., a selection of a deal of the day) to another device (e.g., a payment terminal such as a card reader) via a communications device (e.g., an RF-based communications device).

FIG. 10 shows architecture 1050, which may include one or more processors 1054. One or more processors 1054 may be configured to utilize external memory 1052, internal memory, or a combination of external memory 1052 and internal memory for dynamically storing information, such as executable machine language, related dynamic machine data, and user input data values.

One or more of the components shown in architecture 1050 may be configured to transmit information to processor 1054 and/or may be configured to receive information as transmitted by processor 1054. For example, one or more displays 1056 may be coupled to receive data from processor 1054. The data received from processor 1054 may include, for example, at least a portion of dynamic numbers and/or dynamic codes. The data to be displayed on the display may be displayed on one or more displays 1056.

One or more displays 1056 may be, for example, touch sensitive and/or proximity sensitive. For example, objects such as fingers, pointing devices, etc., may be brought into contact with displays 1056, or into proximity with displays 1056. Detection of object proximity or object contact with displays 1056 may be effective to perform any type of function (e.g., transmit data to processor 1054). Displays 1056 may have multiple locations that are able to be determined as being touched, or determined as being in proximity to an object.

Input and/or output devices may be implemented within architecture 1050. For example, integrated circuit (IC) chip 1060 (e.g., an EMV chip) may be included within architecture 1050, that may communicate information to a chip reader (e.g., an EMV chip reader). Radio frequency identification (RFID) module 1062 may be included within architecture 1050 to enable the exchange of information between an RFID reader/writer and architecture 1050.

Other input and/or output devices 1068 may be included within architecture 1050, for example, to provide any number of input and/or output capabilities on a card (e.g., card 1000 of FIG. 10). For example, other input and/or output devices 1068 may include an audio device capable of receiving and/or transmitting audible information. Other input and/or output devices 1068 may include a Wi-Fi device, such that a card (e.g., card 1000 of FIG. 10) may access an open network (e.g., the internet).

Other input and/or output devices 1068 may include a device that exchanges analog and/or digital data using a visible data carrier. For example, light pulses may be received by other input and/or output 1068 and may be construed as data indicative of eCoupons and associated eCoupon details that may be stored within memory 1052. Other input and/or output devices 1068 may include a device, for example, that is sensitive to a non-visible data carrier, such as an infrared data carrier or electromagnetic data carrier. Other input and/or output devices 1068 may include a device, for example, that simulates a touch or proximity of a pointing device (e.g., a human finger or stylus). Such a simulation may, for example, be detected by a touch sensitive display as information.

Persons skilled in the art will appreciate that a card (e.g., card 1000 of FIG. 10) may, for example, be a self-contained device that derives its own operational power from one or more batteries 1058. Furthermore, one or more batteries 1058 may be included, for example, to provide operational power to a card for a period of time (e.g., approximately 2-4 years). One or more batteries 1058 may be included, for example, as rechargeable batteries.

A dynamic magnetic stripe communications device may be included on a card (e.g., card 1000 of FIG. 10) to communicate information to, for example, a read-head of a magnetic stripe reader via, for example, electromagnetic signals. For example, electromagnetic field generators 1070-1074 may be included to communicate one or more tracks of electromagnetic data to read-heads of a magnetic stripe reader. Electromagnetic field generators 1070-1074 may include, for example, a series of electromagnetic elements, where each electromagnetic element may be implemented as a coil wrapped around one or more materials (e.g., a magnetic material and/or a non-magnetic material). Additional materials may be placed outside the coil (e.g., a magnetic material and/or a non-magnetic material).

Electrical excitation by processor 1054 of one or more coils of one or more electromagnetic elements via, for example, driving circuitry 1064 may be effective to generate electromagnetic fields from one or more electromagnetic elements. One or more electromagnetic field generators 1070-1074 may be utilized to communicate electromagnetic information to, for example, one or more read-heads of a magnetic stripe reader.

Timing aspects of information exchange between a card and the various input and/or output devices implemented on a card may be determined by a processor of the card. Detector 1066 may be utilized, for example, to sense the proximity and/or actual contact, of an external device, which in turn, may trigger the initiation of a communication sequence. The sensed presence and/or touch of the external device may then be communicated to a controller (e.g., processor 1054), which in turn may direct the exchange of information between a card (e.g., card 1000 of FIG. 10) and the external device. The sensed presence and/or touch of the external device may be effective to, for example, determine the type of device or object detected.

For example, the detection may include the detection of a read-head of a magnetic stripe reader. In response, processor 1054 may activate one or more electromagnetic field generators 1070-1074 to initiate a communications sequence with, for example, one or more read-heads of a magnetic stripe reader. The timing relationships associated with communications between one or more electromagnetic field generators 1070-1074 and one or more read-heads of a magnetic stripe reader may be provided through use of the detection of the magnetic stripe reader.

Persons skilled in the art will appreciate that processor 1054 may provide user-specific and/or card-specific information through utilization of any one or more buttons (e.g., buttons 1010-1018 of card 1000 of FIG. 10), RFID 1062, IC chip 1060, electromagnetic field generators 1070-1074, and other input and/or output devices 1068.

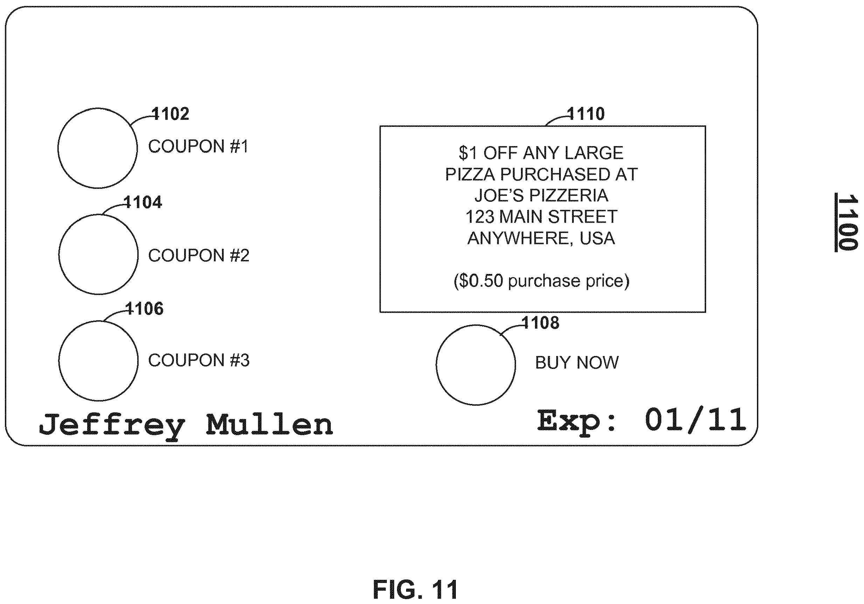

FIG. 11 shows card 1100. Card 1100 may include, for example, one or more buttons 1102-1108 and a display 1110. A user of card 1100 may, for example, select any of buttons 1102-1106 to display information onto display 1108 that may be indicative of coupon information. A user may, for example, select button 1102 to display a coupon that may be available for purchase. A user of card 1100 may, for example, select button 1108 to purchase the coupon displayed within display 1110.

For example, the coupon displayed within display 1110 may be selected for purchase if the user selects button 1108 while the coupon is being displayed. Settlement of the purchase price of the coupon may be delayed, for example, until the user swipes card 1100 through any magnetic stripe reader. In so doing, settlement data associated with the purchase of the coupon displayed within display 1110 may be stored within card 1100 until such time that card 1100 is swiped during a subsequent transaction. Accordingly, for example, settlement data associated with the purchase of the coupon displayed within display 1110 may be communicated at the same time that data associated with the subsequent transaction may be communicated.

A user may purchase a coupon and redeem the coupon in a single transaction. For example, a user who wishes to make a purchase with a coupon that may be honored at a merchant's place of business may press button 1108 and swipe card 1100 at the merchant's point-of-sale device. The purchase price of the coupon may, for example, be reconciled against the redemption value of the coupon and the difference may be immediately applied to the purchased goods. For example, a user redeeming a $1 off coupon whose purchase price is $.50, receives a discount of $.50 on a purchase applied against the coupon. The merchant's (e.g., Joe's Pizzeria) point-of-sale system may intercept a payment authorization message resulting from a card swipe and may immediately deduct the discount from the purchase price of the goods (e.g., a large pizza).

Card 1100 may be Wi-Fi enabled. Accordingly, for example, card 1100 may access internet-based authorization servers in order to settle a coupon's payment price against an account that may be associated with card 1100. A user of card 1100 may, for example, press button 1108 to complete the coupon purchase transaction. In so doing, a coupon's purchase price may be deducted from an account (e.g., a debit account) that may be associated with card 1100. The purchased coupon may then be stored within card 1100 for future use. Accordingly, for example, a user of card 1100 may redeem the purchased coupon and may receive the discount on the user's next account statement (e.g., the user's checking account balance may be increased after the coupon is redeemed, after the coupon company and the merchant reconcile, and after the user's account reconciles at month's end).

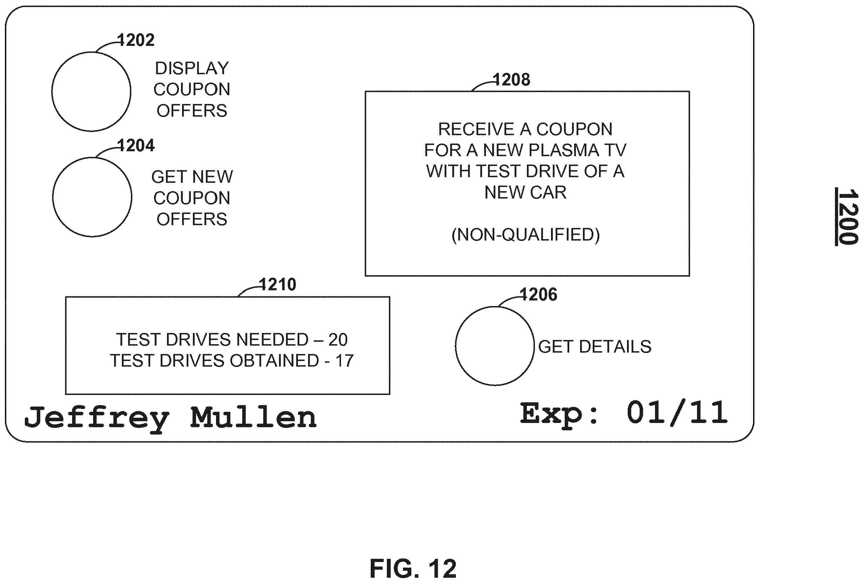

FIG. 12 shows card 1200. Card 1200 may include a mobility device (e.g., a Wi-Fi device), one or more buttons 1202-1206 and displays 1208-1210. A coupon offer, for example, may be provided to a user of card 1200 and may be displayed by display 1208. Such an offer, for example, may provide information as to whether the coupon offer may be redeemed (e.g., a qualified coupon offer) or may not yet be redeemed (e.g., a non-qualified coupon offer).

Coupon offers may, for example, be utilized as social networking tools to engage and motivate members of a group to act in response to a particular coupon offer. For example, a coupon offer may be provided in display 1208 as a non-qualified coupon offer, but through interaction of members of a social networking group, may become a qualified coupon offer (e.g., a non-qualified coupon offer may become qualified if a predetermined number of members participate in a qualifying event).

The coupon offer as displayed in display 1208, for example, may identify a particular coupon offer as being a non-qualified coupon offer. A user of card 1200 may, for example, examine further details of the non-qualified coupon offer by, for example, pressing button 1206. Such details as may be provided by display 1210, for example, may include a description of a qualifying event (e.g., twenty test drives needed), which may be required to transform the coupon offer into a qualified coupon offer. Further, display 1210 may provide information (e.g., seventeen test drives so far) so that a user of card 1200 may determine whether the qualifying event is within reach.

Accordingly, for example, a user may determine that a qualifying event may be close at hand, which may prompt him or her to participate (e.g., take a test drive). In so doing, each person participating may help to achieve the qualifying event, thereby helping to convert a non-qualified coupon offer (e.g., nobody gets a plasma TV) into a qualified coupon offer (all twenty who took a test drive and opted into the coupon offer may now redeem the coupon for a new plasma TV).

Card 1200 may store multiple coupon offers. A user of card 1200 may, for example, press button 1202 multiple times to cycle through each coupon offer that may be stored within card 1200. Upon each depression of button 1202, for example, display 1208 may provide information that may be indicative of a coupon offer that may be stored within card 1200. Further details of such a coupon offer may be further provided by display 1210 automatically, or upon depression, for example, of button 1206.

Card 1200 may scan for new coupon offers. A user of card 1200 may, for example, press button 1204 to cause card 1200 to scan for any new coupon offers that may be in existence. For example, a user of card 1200 may be within a communication distance of a merchant's communication device (e.g., an RFID device) and may press button 1204 to obtain any new coupon offers from the merchant. The merchant's communication device may, for example, interact with card 1200 to download any and all coupon offers that may be available.

Persons skilled in the art will appreciate that card 1200 may automatically query for new coupon offers. For example, card 1200 may be Wi-Fi enabled, which may allow card 1200 to access internet-based locations (e.g., coupon company websites, merchant websites, and email accounts) to automatically and electronically retrieve coupon offers.

Card 1200 may, for example, detect a presence of a merchant device (e.g., an RFID device) that may be capable of downloading coupon offers into card 1200. Card 1200 may, for example, automatically retrieve coupon offers from the merchant device upon detection of such a device.

Card 1200 may, for example, detect a presence of another card that may be capable of downloading coupon offers into card 1200. A processor of card 1200 may, for example, receive information indicative of a coupon via a touch sensitive display of card 1200. Another card may, for example, include electronics that may simulate a sequence of touches or proximity of touches. In so doing, a processor of card 1200 may detect such a sequence of touches using a touch sensitive display and may construe such information as information indicative of one or more coupons.

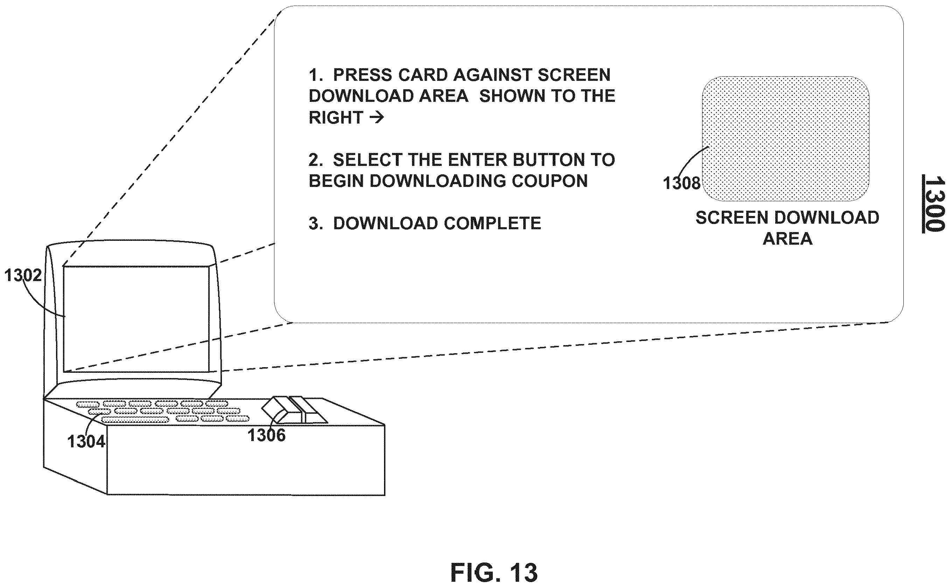

FIG. 13 shows system 1300. System 1300 may include a point-of-sale device utilized by a particular merchant. The point-of-sale device may include, for example, keyboard 1304, magnetic stripe reader 1306 and display 1302. A screen download area (e.g., display portion 1308) may be provided as an output device that may be used to download coupon information into a cardholder's card.

For example, a cardholder may have been alerted (e.g., via email, regular mail, internet pop-up message, or TV commercial) that a coupon is available for download. A user may, for example, visit a merchant's place of business to take possession of the coupon. The cardholder may, for example, be identified (e.g., identifying information may be entered into keyboard 1304 or the cardholder's card may be swiped through magnetic stripe reader 1306). The cardholder may be prompted, upon positive identification for example, to press the card against screen portion 1308. The merchant's point-of-sale device may be activated (e.g., by pressing the "Enter" button of keyboard 1304) and coupon information may be communicated from display 1308 to the cardholder's card (e.g., by creating varying intensities and/or durations of light pulses that are construed by a processor on the cardholder's card as information that is indicative of one or more coupons).

A cardholder may, for example, be a member of a socially networked group. A cardholder may, for example, be identified as a member of the socially networked group through information contained within a card owned by the cardholder. Such identifying information may, for example, be communicated to a merchant's point-of-sale device while a transaction is being conducted, which may trigger a coupon distribution to the cardholder.

For example, a cardholder's card may be swiped through magnetic stripe reader 1306 and group identifying information may be communicated (e.g., via discretionary data) to the merchant's point-of-sale device. Upon detection of the cardholder as a member of a socially networked group and/or the existence of a qualifying event (e.g., the socially networked group has a combined expenditure of a minimum dollar amount at the merchant's place of business), the merchant's point-of-sale device may indicate that a coupon is ready for distribution. Accordingly, for example, the cardholder's card may be placed against display portion 1308 and the coupon may be downloaded into the cardholder's card (e.g., via flashing light generated by screen portion 1308).

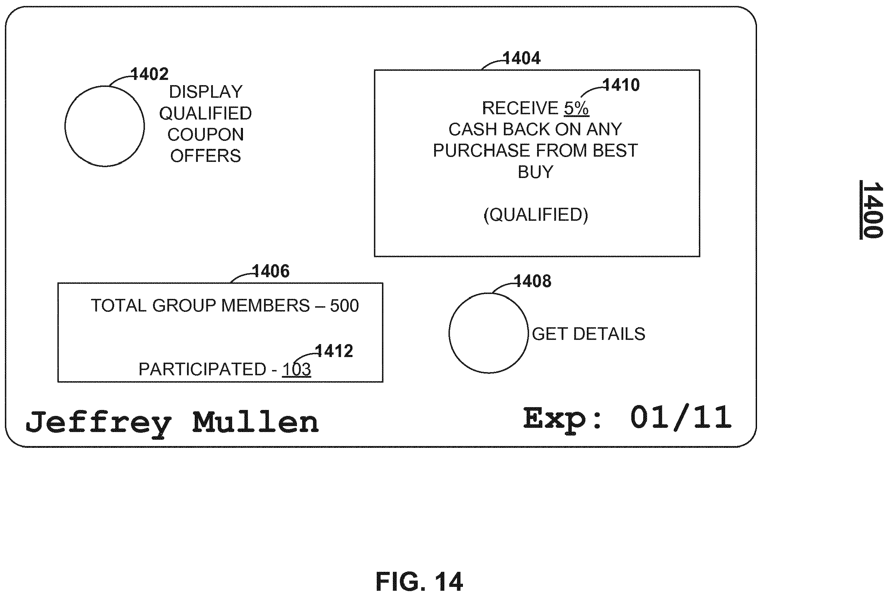

FIG. 14 shows card 1400. Card 1400 may, for example, include buttons 1402 and 1408 and displays 1404 and 1406. Card 1400 may, for example, store a number of qualified coupon offers (e.g., coupon offers ready for redemption) that may be recalled from the memory of card 1400 and displayed onto display 1404 by pressing button 1402. Card 1400 may, for example, store details associated with the stored coupon offers and may display them automatically onto display 1406. Card 1400 may, for example, display stored coupon offer details only upon detection of a manual input (e.g., depression of button 1408). Card 1400 may, for example, detect a presence of a merchant device (e.g., an RFID device at Best Buy) that may be capable of downloading coupon offer information into card 1400.

For example, a merchant (e.g., Best Buy) may track a number of members that may be associated with a particular social network. The merchant may be interested, for example, in maximizing a number of group members who purchase goods and, therefore, may provide a coupon offer through a coupon company whose efforts may maximize the number of group members who purchase goods from the merchant.

More particularly, for example, the merchant may track the number of members associated with a particular social network that purchased goods from the merchant (e.g., member count 1412) and a total number of members who may be associated with the social network. Based upon a minimum number of purchasing members (e.g., 100), the merchant may wish to extend a coupon offer to all members of the social network. Accordingly, for example, the merchant may offer cash back to all group members, but only if the number of purchasing group members exceeds a minimum threshold (e.g., 100). A coupon company working in conjunction with the merchant may, for example, wish to negotiate a minimum cash back percentage (e.g., 5%) that may be offered by the merchant.

Accordingly, for example, each time a member utilizes card 1400 to purchase goods from the merchant, the merchant's database may be updated with the member's information (e.g., social network group identification and total number of dollars spent). In response, the merchant may, for example, modify the coupon offer to reflect the increasing patronage.

For example, a minimum number of patronizing group members (e.g., 100) may result in a coupon offering of, for example, 5% cash back. The coupon company and the merchant may, for example, negotiate an additional 0.5% cash back for each additional 50 patronizing group members based upon the number of patronizing members that may exist at any given time. Accordingly, for example, a maximum of 9% cash back may be offered to each group member, but only if the total group membership patronizes the merchant.

Each member of the social network group, for example, may receive updates as to a status of a coupon currently being offered by the merchant. For example, a member may introduce his or her card to within a communication distance of a merchant terminal (e.g., an RFID device) to receive an update as to a number of patronizing group members to date (e.g., member count 1412) and/or percentage discount 1410 currently being offered by the merchant.

Accordingly, for example, non-patronizing members may be encouraged by patronizing members to transact a purchase from the merchant, so that a discount realized by a redeemed coupon may be maximized. In so doing, a redeemed value of the merchant coupon may, for example, be batch processed and settled on a deferred basis, whereby the cardholder may receive his or her cash back percentage on the cardholder's next account statement.

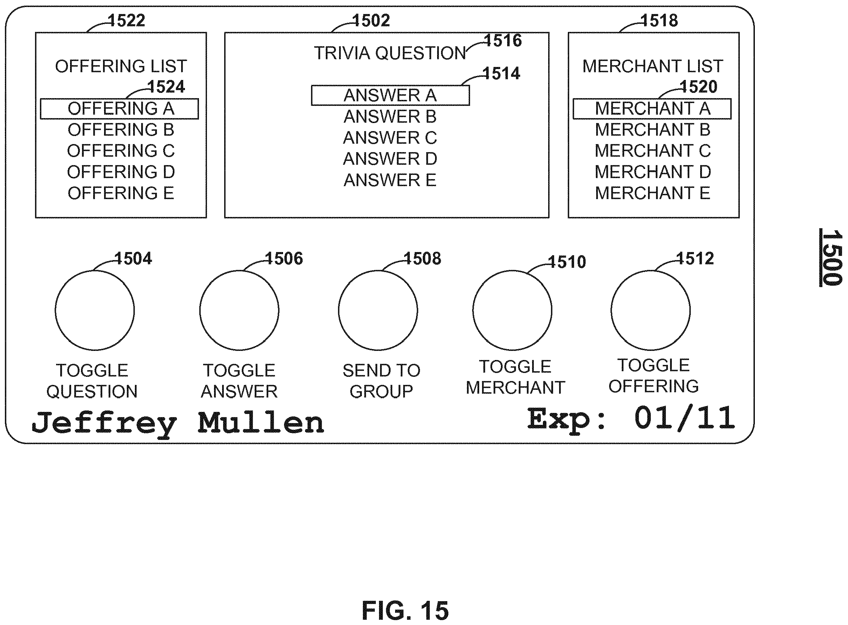

FIG. 15 shows card (e.g., mobile device) 1500. Card 1500 may include displays 1502, 1518, 1522 and buttons 1504-1512. Card 1500 may, for example, provide communications (e.g., Wi-Fi communications) to allow a user of card 1500 to communicate with other members of a social group. Card 1500 may, for example, provide communications to a coupon company having a list of one or more merchants who may be offering one or more coupons on a particular day.

Display 1518 may, for example, display a list of one or more merchants who may be offering a particular coupon. More than one merchant may, for example, be identified by scrolling merchant identifier 1520 down through a list of participating merchants using button 1510. For each merchant identified by merchant identifier 1520, one or more coupons may be identified by offering identifier 1524 within display 1522.

A selected coupon may be shared with other members of a socially networked group. For example, once a particular coupon is highlighted (e.g., by successive selections of buttons 1510 and/or 1512), the highlighted coupon may be shared (e.g., communicated) with other members of a group by selecting button 1508.

Alternately, for example, coupons may be earned by one or more members of a group and propagated amongst the group through participation in a socially networked gaming operation. Display 1502 may, for example, display a trivia question 1516, which may be changed to a different trivia question via selection of button 1504. Each answer of a list of answers for a corresponding trivia question may be selected by scrolling answer identifier 1514 via successive selections of button 1506.

The user of mobile device 1500 may, for example, correctly answer the trivia question, which may then authorize the user to propagate the selected coupon amongst the remaining members of the group. The user of card 1500 may, for example, incorrectly answer the trivia question, which may then deny an ability of the user to propagate the selected coupon to any of the members of the group.

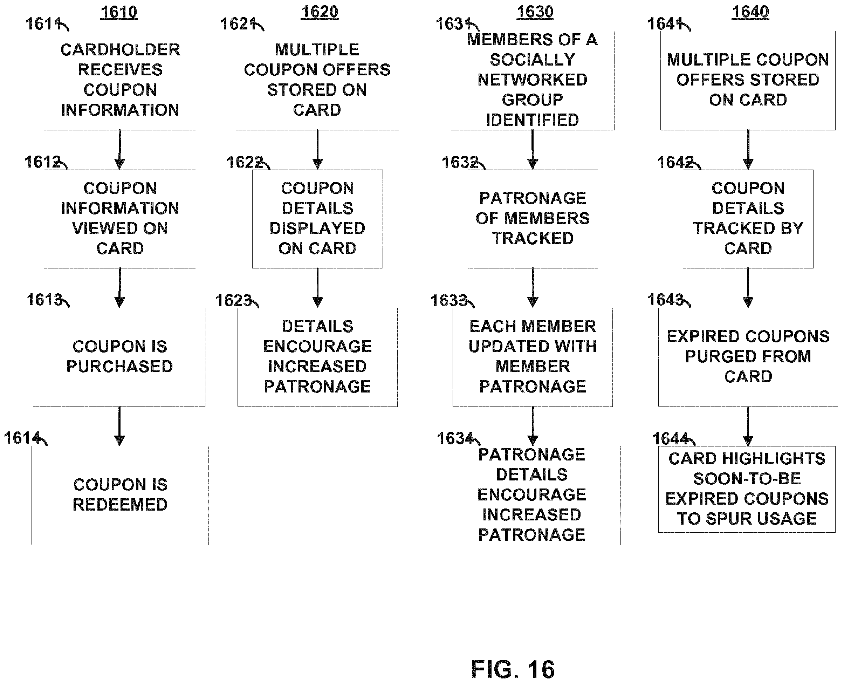

A flow diagram of process sequences is shown in FIG. 16. Step 1611 of sequence 1610 may include receiving coupon information. Coupon information may be received, for example, in hard copy (e.g., paper form). Alternatively, for example, a coupon may be received as an eCoupon. Coupons may, for example, be received by persons who may have previously registered with a coupon promotion and distribution scheme. Registered persons may, for example, preauthorize coupon purchases against an account (e.g., a debit or credit account) that may be associated with a cardholder's card.

Coupons may be received in any number of electronic formats. For example, eCoupons may be received via email, merchant websites, and merchant terminals (e.g., RFID terminals or download screen enabled merchant displays). Coupons may, for example, be received via a card to card transfer.

Coupons received electronically may, for example, be viewed on a card owned by a cardholder (e.g., as in step 1612 of sequence 1610). For example, a card may include one or more buttons and one or more displays. Pressing one button, for example, may display a coupon offer and a purchase price for the coupon offer. Pressing another button, for example, may provide authorization to purchase the displayed coupon offer (e.g., as in step 1613). Pressing yet another button, for example, may reject the coupon offer and purge the coupon offer from the card's memory. Pressing yet another button, for example, may redeem a previously purchased coupon offer (e.g., as in step 1614).

A coupon offer may, for example, be purchased and redeemed at the same time. For example, an unpurchased coupon offer may be displayed on a card and the card may be used during a purchase transaction. Coupon information may, for example, be communicated by the card (e.g., electromagnetically communicated via a dynamic magnetic stripe communications device that may be included on the card) along with other magnetic stripe information that may be needed to complete a particular transaction. A purchase price of the coupon may, for example, be added to the authorization message by the merchant's point-of-sale device. Credit for the redeemed coupon offer may, for example, be implemented immediately by subtracting the credit from the authorized purchase price within the authorization message. Alternately, for example, the difference between the coupon offer purchase price and redeemed value may be processed after the coupon company settles with the merchant.

Step 1621 of sequence 1620 may include storing one or more coupon offers on a card. Manual input (e.g., button presses) may, for example, be used to display each stored coupon offer. Other details concerning each coupon offer may, for example, be displayed on another display on a card (e.g., as in step 1622). Details may, for example, be displayed upon demand (e.g., button press) or automatically (e.g., when a coupon offer is displayed, so are the related details).

Certain details relating to coupon offers may encourage increased patronage (e.g., as in step 1623). For example, a coupon offer may be non-qualified (e.g., not yet available for redemption), but the related coupon offer details may reveal that qualification of the coupon offer is close at hand (e.g., the next purchase at a particular merchant's place of business qualifies the coupon offer for redemption). Accordingly, for example, a cardholder may be motivated to purchase a merchant's goods if that cardholder knew that his or her purchase would qualify a coupon offer for redemption.

Step 1631 of sequence 1630 may include identifying members of a socially networked group. For example, such members may, for example, be identified by an identification code contained within a member's card. Each time a member uses his or her card during a sales transaction, for example, a point-of-sale terminal may track that member's patronage (e.g., as in step 1632). Likewise, patronage of other members may be tracked and each member may be updated (e.g., as in step 1633) with cumulative patronage statistics (e.g., member patronage at a particular merchant's place of business may be tracked and a total amount of dollars spent by members at the merchant's place of business may be made known to each member). Accordingly, for example, statistics of member patronage may encourage increased patronage by the membership (e.g., as in step 1634) since increased patronage may result in an increased value that may be provided by a particular coupon offer.

Step 1641 of sequence 1640 may include storing one or more coupon offers on a card. Coupon details (e.g., expiration date) may be tracked by a processor of the card (e.g., as in step 1642). Upon detection of a coupon detail by the card (e.g., expiration date of a coupon has passed), coupons may be purged from a memory of the card (e.g., as in step 1643). A card may, for example, anticipate expiration of a coupon stored within the card. A card may, for example, highlight the soon-to-be expired coupon (e.g., as in step 1644) by, for example, displaying the soon-to-be expired coupon on a display of the card. Accordingly, for example, a user of the card may be reminded to use the coupon prior to expiration, thereby spurring usage of the coupon and increasing patronage of the participating merchant.

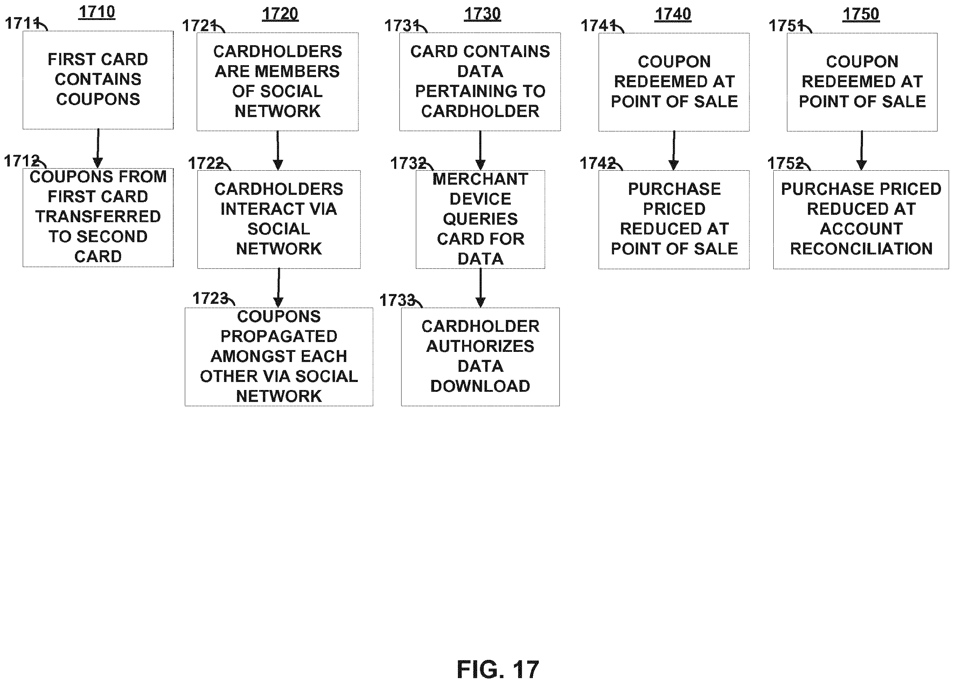

A flow diagram of process sequences is shown in FIG. 17. Step 1711 of sequence 1710 may include a card (e.g., mobile device) that contains coupons stored within a card's memory. A card may, for example, include a communications device (e.g., IR, RFID, touch simulator) that may be used to communicate coupon data to another card. For example, a card may include electronics that may simulate touch and another card may include, for example, a touch sensitive display. The two cards may, for example, be pressed against each other, where one of the cards simulates a series of touches and another card detects the simulated touches. The detected touches may, for example, be construed as data indicative of coupon data, thereby transferring coupon data from one card to another card (e.g., as in step 1712) via a series of simulated touches and a corresponding series of touch detections.

Step 1721 of sequence 1720 may include two or more members of a social network. Each member may, for example, have a card (e.g., a mobile device) that may be operable to communicate (e.g., as in step 1722) via a network (e.g., the internet). One member may propagate coupons (e.g., as in step 1723) to one or more other members of the social network by selecting displayed coupons on the member's device for propagation to other members of the network. Alternately, for example, members may earn the right to exchange coupons amongst each other by successfully playing social games.

Step 1731 of sequence 1730 may include data (e.g., demographic and socio-economic data) that may pertain to the cardholder. A merchant device (e.g., a point-of-sale device) may query a cardholder's card for such information (e.g., as in step 1732). A cardholder may either authorize or deny transfer of the cardholder's data by pressing a button on the card in response to the query (e.g., as in step 1733).

Step 1741 of sequence 1740 may include a redemption of a coupon at a merchant's point-of-sale device. For example, a merchant's point-of-sale device may intercept an authorization message and immediately reduce a purchase price of the purchased goods within the authorization message (e.g., as in step 1742).

Step 1751 of sequence 1750 may include a redemption of a coupon at a merchant's point-of-sale device. For example, a merchant's point-of-sale device may include a coupon within data transmitted to an authorization server (e.g., coupon information may be communicated within one or more discretionary data fields). A patron may, for example, realize the value of the redeemed coupon once the patron's account (e.g., a debit or credit account associated with a card) is reconciled at the end of the billing cycle of the account (e.g., as in step 1752).

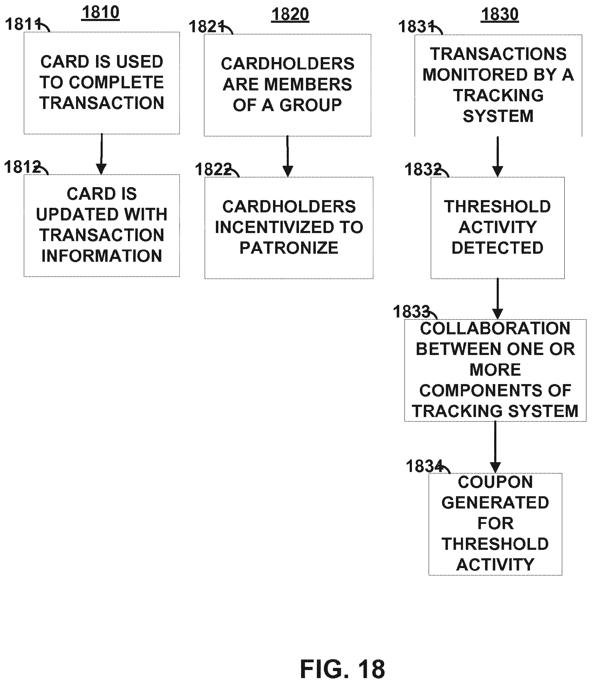

A flow diagram of process sequences is shown in FIG. 18. Step 1811 of sequence 1810 may include a card that may be used to complete a point-of-sale transaction at a merchant's place of business. Once the transaction is complete, the merchant's point-of-sale device may update the cardholder's card with information concerning the completed transaction (e.g., as in step 1812).

For example, redemption information may be communicated to the cardholder's card that may be associated with a coupon that may have been used to complete a transaction. A particular coupon contained within a card, for example, may have been used to complete the transaction. Accordingly, for example, the spent coupon may be purged from the card's memory and made unavailable for future use. A particular coupon contained within the card, for example, may only be partially spent. Accordingly, for example, the partially spent coupon's value may be reduced by an amount used during the transaction and the reduced coupon value may be stored within the card's memory so that only the reduced coupon value may be available for future use.

Step 1821 of sequence 1820 may include cardholders that may, for example, belong to a group of cardholders (e.g., a socially-networked group of cardholders). Such cardholders may be incentivized to patronize a merchant or a group of merchants (e.g., as in step 1822). For example, cardholders may encourage one another to patronize a particular merchant in hopes of receiving a coupon that may be redeemed at that merchant's place of business. Alternately, coupon companies (e.g., card issuers) may incentivize cardholders to pool their respective purchases at a merchant or a group of merchants.

Step 1831 of sequence 1830 may include transactions of one or more cardholders that may be monitored by a tracking system (e.g., a networked group of components including one or more point-of-sale devices, one or more card issuers, and one or more coupon companies). A threshold activity (e.g., a minimum dollar amount of expenditures as in step 1832) may cause a collaboration between one or more components of the tracking system (e.g., as in step 1833).

For example, a merchant's point-of-sale system may report to a card issuer that a purchase transaction has completed. An accumulated value of merchant sales tracked by a network entity (e.g., the card issuer) may exceed a threshold dollar amount of sales for that particular merchant. Accordingly, for example, a network entity (e.g., a coupon company) may be alerted to the threshold dollar amount and may generate one or more coupons (e.g., as in step 1834) to those cardholders who, for example, contributed to the threshold dollar amount of sales for the participating merchant.

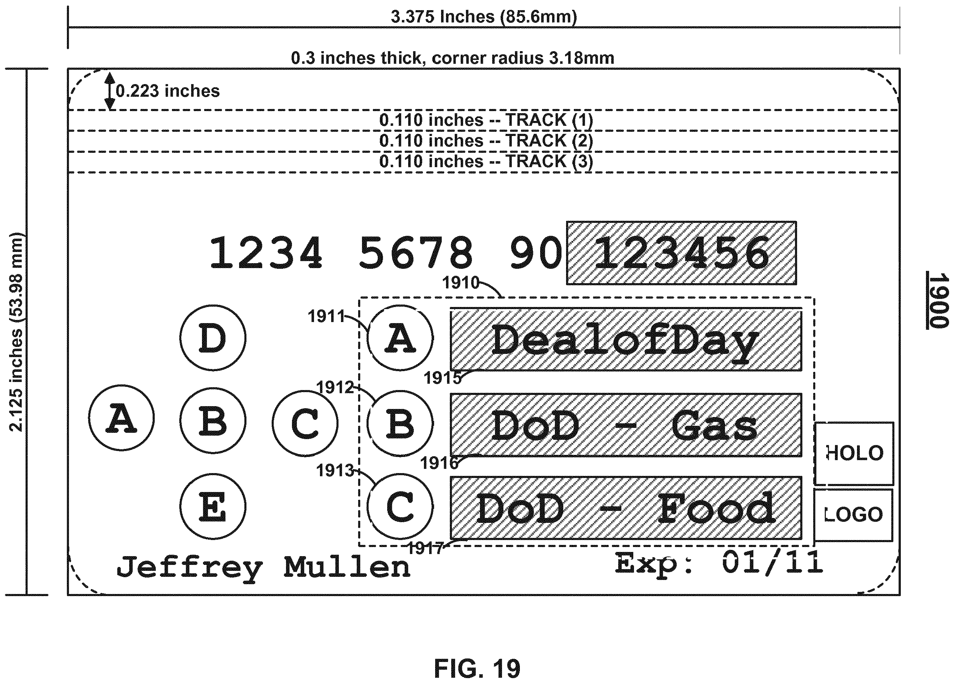

FIG. 19 shows card 1900 that may include, for example, configuration 1910. Configuration 1910 may include, for example, button 1911, button 1912, button 1913, display 1915, display 1916, and display 1917. Button 1911 may be associated with display 1915. Button 1911 may be pressed to utilize the option described by display 1915. Button 1912 may be associated with display 1916. Button 1912 may be pressed to utilize the option described by display 1916. Button 1913 may be associated with display 1917. Button 1913 may be pressed to utilize the option described by display 1917. A card may include additional buttons or displays or may not include the number of buttons or displays of card 1900. For example, a card may include only a single button (e.g., button 1911).

Periodically, a user may be provided with a new deal of the day. A user may receive information indicative of the deal of the day on the card itself, a mobile telephonic device, or via a website. A user may communicate data from a website or mobile device to, for example, a card. For example, a user may receive an update window on a display screen of a browser or mobile phone that may blink every day. Information may be communicated to the card via this blinking. Accordingly, for example, information may be communicated to a card via light pulses. This information may include information to be displayed on a display of a card (e.g., displays 1915, 1916, and 1917) as well as information indicative of the information that should be included in a communication to a card reader should a particular button be pressed (e.g., button 1911). A user may select one or more deals of the day from a list of deals of the day and may communicate these selections to a card. A remote processor may link the selected deals of the day to particular buttons of a card (e.g., particular information received by a card reader when particular buttons are pressed by a card) such that information regarding the user's selections is not needed, for example, to be communicated to a card.

Button 1911 may be associated with a deal of the day that may provide, for example, a coupon for a particular merchant (e.g., Walmart), type of merchant (e.g., grocery store), group of merchants (e.g., Southwest and Airtran), and/or any other type of qualification. The coupon may be a discount for an overall purchase (e.g., any gas station purchase), a type of purchase (e.g., any type of gas from a gas station), or a particular item (e.g., large cup of decaffeinated coffee from the gas station). A deal of the day may expire within a particular amount of time (e.g., by the end of the day). A deal of the day may be a one-time use or multi-time use deal within that time period. A deal of the day, for example, may include a set dollar amount off a product or purchase or a percentage discount off a product or purchase.

A deal may require that multiple people utilize the deal before the deal is activated and settled. For example, a deal may require a certain number of people (e.g., more than 1,000) utilize the deal for people to obtain the benefits of the deal. The benefits of the deal may be, for example, provided to a user after a transaction has completed and settled and may be applied to a user's card statement (e.g., credit card statement) after the purchase has been completed if the requirements of the deal have been met.

A deal of the day may require a user to purchase the deal of the day. A deal of the day may be purchased with any purchase or only at the purchase of a merchant associated with the redemption of the deal of the day. Accordingly, a user may press a deal of the day button at any merchant store to purchase the deal and then may have the remainder of the day to utilize the deal of the day at the appropriate merchant's store else lose the deal of the day. Persons skilled in the art will appreciate that a deal of the day is not, for example, limited to a day. A deal of the day may last for any period and may not, for example, expire until the deal is redeemed. Similarly, a deal of the day may be issued at any periodicity and may last, for example, for any duration (e.g., may never expire).

Multiple deals may be provided on a card. For example, deals may be provided for different types of merchants or merchant categories. A user may receive the ability to purchase and/or redeem deals from multiple deals. For example, a user may select to receive deals associated with gas and food. The user may then receive deals for those merchant categories (e.g., each day). The user may change the merchant categories and the change may take effect after a period of time (e.g., for the next day). For example, button 1912 may be provided to allow a user to purchase and/or redeem a deal associated with gas merchants. Button 1913 may be included to allow a user to purchase and/or redeem a deal associated with food merchants.

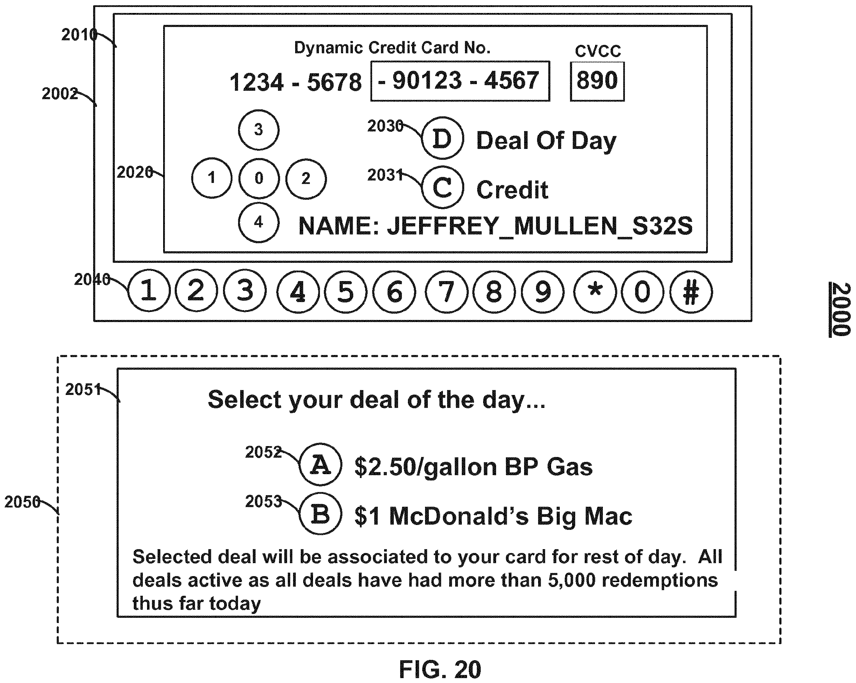

FIG. 20 shows device 2000 that may be, for example, a mobile telephonic device such as a mobile cellular phone. Any card provided herein may be provided as a virtual card on device 2000. Mechanical buttons 2040 may be utilized by a user to make selections (e.g., selections associated with a virtual card). Virtual buttons may be included that a user can activate (e.g., by utilizing a touch-screen displaying a virtual card) so that the user can make selections associated with the virtual card. Device 2000 may include, for example, housing 2002, display 2010, virtual card 2020, and virtual buttons 2030 and 2031. Device 2000 may communicate to a card reader via electromagnetic signals (e.g., RF signals). Virtual button 2030 may be associated with a deal of the day. Button 2031 may be associated with using a particular payment card account (e.g., credit, debit, or pre-paid account).

Display configuration 2050 may be provided and may be displayed, for example, on a wireless device such as a wireless telephonic device or a wireless payment card. Configuration 2050 may include graphical user interface 2051 that may include, for example, virtual button 2052 and virtual button 2053. A user may be provided with the option of selecting, each day (or other interval), a deal for that day (or other interval). A user may perform a selection by pressing the virtual button associated with the selection. Information associated with the selection may be provided, for example, to a remote server (e.g., via a telephonic data communication) and/or a card (e.g., via light and/or sound pulses). A user may select a button on a physical card that is labeled as, for example, a "deal" button. Information indicative of that selection may then be communicated from the card to a card reader (e.g., via magnetic stripe data or RFID data) and then provided to a remote server. The remote server may then determine the deal that the user previously selected and initiate processing of that deal. Processing of a particular deal may be, for example, applying a discount on an account statement associated with an account utilized to complete a purchase associated with the deal (e.g., credit card statement).

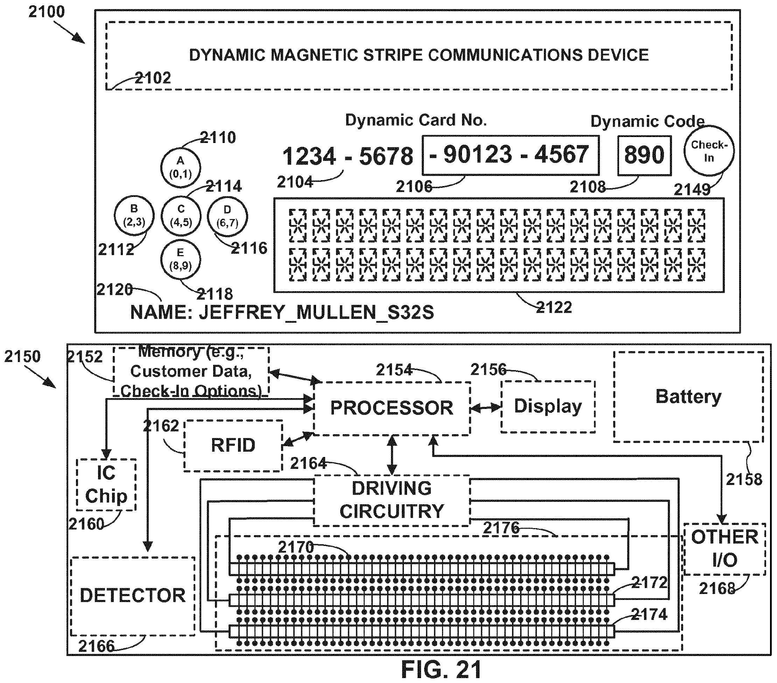

FIG. 21 shows card 2100 that may include, for example, a dynamic number that may be entirely, or partially, displayed using a display (e.g., display 2106). A dynamic number may include a permanent portion such as, for example, permanent portion 2104 and a dynamic portion such as, for example, dynamic portion 2106. Card 2100 may include a dynamic number having permanent portion 2104 and permanent portion 2104 may be incorporated on card 2100 so as to be visible to an observer of card 2100. For example, labeling techniques, such as printing, embossing, laser etching, etc., may be utilized to visibly implement permanent portion 2104.

Card 2100 may include a second dynamic number that may be entirely, or partially, displayed via a second display (e.g., display 2108). Display 2108 may be utilized, for example, to display a dynamic code such as a dynamic security code. Card 2100 may also include third display 2122 that may be used to display graphical information, such as logos and barcodes. Third display 2122 may also be utilized to display multiple rows and/or columns of textual and/or graphical information. For example, display 2122 may be utilized to display information that is indicative of data (e.g., customer data and/or check-in data such as check-in options) that may be stored within a memory of card 2100).

Persons skilled in the art will appreciate that any one or more of displays 2106, 2108, and/or 2122 may be implemented as a bi-stable display. For example, information provided on displays 2106, 2108, and/or 2122 may be stable in at least two different states (e.g., a powered-on state and a powered-off state). Any one or more of displays 2106, 2108, and/or 2122 may be implemented as a non-bi-stable display. For example, the display is stable in response to operational power that is applied to the non-bi-stable display. Other display types, such as LCD or electro-chromic, may be provided as well.

Other permanent information, such as permanent information 2120, may be included within card 2100, which may include user specific information, such as the cardholder's name or username. Permanent information 2120 may, for example, include information that is specific to card 2100 (e.g., a card issue date and/or a card expiration date). Information 2120 may represent, for example, information that includes information that is both specific to the cardholder, as well as information that is specific to card 2100.

Card 2100 may accept user input data via any one or more data input devices, such as buttons 2110-2118. Buttons 2110-2118 may be included to accept data entry through mechanical distortion, contact, or proximity. Buttons 2110-2118 may be responsive to, for example, induced changes and/or deviations in light intensity, pressure magnitude, or electric and/or magnetic field strength. Such information exchange may then be determined and processed by a processor of card 2100 as data input.

For example, one or more buttons 2110-2118 may be activated to display indicia on a display (e.g., display 2122) that may be associated with corresponding information (e.g., customer data and/or check-in options) that may be stored within a memory of card 2100. Alternately, for example, a single button (e.g., button 2110) may be pressed multiple times to sequentially display data that may be associated with information (e.g., customer data and/or check-in options).

Button 2149 may be an information exchange feature that may be associated with card 2100. Button 2149 may, for example, be actuated so that a processor of card 2100 may communicate information (e.g., customer data) that may be stored within a memory of card 2100. Button 2149 may, for example, be actuated so that a processor of card 2100 may communicate information that may be stored within a memory of card 2100 in addition to financial information that may be communicated during a financial transaction.

Persons skilled in the art will appreciate that information stored on a card (or other device such as a mobile telephonic device) and communicated to a terminal for completing a purchase transaction may include, for example, customer profile data (e.g., purchase history, purchase preferences, and geographic information). Information communicated from a merchant terminal may include, for example, information communicated from a card (or other device such as a mobile telephonic device) and merchant information (e.g., merchant identifier, merchant category, merchandise identifier, merchandise descriptions, merchandise price, merchandise discounts, and promotions). Information communicated from a card (or other device) or merchant terminal may include financial institution information (e.g. bank promotions and bank identifier) as well as any other type of data.

Persons skilled in the art will appreciate that a physical payment card may be provided as a virtual payment card on a display of any device, such as a mobile telephonic device or personal computing device. A button on a physical payment card may be a button on any device, such as a mobile telephonic device or personal computing device. Accordingly, for example, a device (e.g., a cell phone) may receive manual input from a manual user interface (e.g., a virtual button on a capacitive touch screen) and communicate information indicative of the selection (e.g., a selection of a check-in feature) to another device (e.g., a payment terminal such as a card reader) via a communications device (e.g., an RF-based communications device).

FIG. 21 shows architecture 2150, which may include one or more processors 2154. One or more processors 2154 may be configured to utilize memory 2152 external to processor 2154, internal memory to processor 2154, or a combination of external memory and internal memory for dynamically storing information, such as executable machine language, related dynamic machine data, user input data values, or any other type of information (e.g., information communicated from a card, other device, or merchant terminal). Check-in option data may be stored as data on memory 2152, retrieved when associated buttons are pressed, and communicated to a merchant terminal (e.g., via dynamic magnetic stripe, exposed chip, or RF data) to complete a purchase transaction.

One or more of the components shown in architecture 2150 may be configured to transmit information to processor 2154 and/or may be configured to receive information as transmitted by processor 2154. For example, one or more displays 2156 may be coupled to receive data from processor 2154. The data received from processor 2154 may include, for example, at least a portion of dynamic numbers and/or dynamic codes. The data to be displayed on the display may be displayed on one or more displays 2156.

One or more displays 2156 may be, for example, touch sensitive and/or proximity sensitive. For example, objects such as fingers, pointing devices, etc., may be brought into contact with displays 2156, or into proximity with displays 2156. Detection of object proximity or object contact with displays 2156 may be effective to perform any type of function (e.g., transmit data to processor 2154). Displays 2156 may have multiple locations that are able to be determined as being touched, or determined as being in proximity to an object.

Input and/or output devices may be implemented on architecture 2150. For example, integrated circuit (IC) chip 2160 (e.g., an EMV chip) may be included within architecture 2150, that may communicate information to a chip reader (e.g., an EMV chip reader). Radio frequency identification (RFID) module 2162 may be included within architecture 2150 to enable the exchange of information between an RFID reader/writer and a card (e.g., card 2100 of FIG. 21).

Other input and/or output devices 2168 may be included within architecture 2150, for example, to provide any number of input and/or output capabilities on a card (e.g., card 2100 of FIG. 21). For example, other input and/or output devices 2168 may include an audio device capable of receiving and/or transmitting audible information. Other input and/or output devices 2168 may include a Wi-Fi device, such that a card (e.g., card 2100 of FIG. 21) may access an open network (e.g., the internet).

Other input and/or output devices 2168 may include a device that exchanges analog and/or digital data using a visible data carrier. For example, light pulses may be received by other input and/or output devices 2168 and may be construed as data indicative of information that may be stored within memory 2152. Other input and/or output devices 2168 may include a device, for example, that is sensitive to a non-visible data carrier, such as an infrared data carrier or electromagnetic data carrier. Other input and/or output devices 2168 may include a device, for example, that simulates a touch or proximity of a pointing device (e.g., a human finger or stylus). Such a simulation may, for example, be detected by a touch sensitive display as information (e.g., information stored in internal memory 2152).

Persons skilled in the art will appreciate that a card (e.g. card 2100 of FIG. 21) may, for example, be a self-contained device that derives its own operational power from one or more batteries 2158. Furthermore, one or more batteries 2158 may be included, for example, to provide operational power to a card for a period of time (e.g., approximately a period between 2 and 5 years such as approximately 2 years). One or more batteries 2158 may be included, for example, as rechargeable batteries.

A dynamic magnetic stripe communications device may be included on a card (e.g., card 2100 of FIG. 21) to communicate information to, for example, a read-head of a magnetic stripe reader via, for example, electromagnetic signals. For example, electromagnetic field generators 2170-2174 may be included to communicate one or more tracks of electromagnetic data to read-heads of a magnetic stripe reader. Electromagnetic field generators 2170-2174 may include, for example, a series of electromagnetic elements, where each electromagnetic element may be implemented as a coil wrapped around one or more materials (e.g., a magnetic material and/or a non-magnetic material). Additional materials may be placed outside the coil (e.g., a magnetic material and/or a non-magnetic material).

Electrical excitation by processor 2154 of one or more coils of one or more electromagnetic elements via, for example, driving circuitry 2164 may be effective to generate electromagnetic fields from one or more electromagnetic elements. One or more electromagnetic field generators 2170-2174 may be utilized to communicate electromagnetic information to, for example, one or more read-heads of a magnetic stripe reader.

Timing aspects of information exchange between a card and the various input and/or output devices implemented on the card may be determined by a processor of the card. Detector 2166 may be utilized, for example, to sense the proximity and/or actual contact, of an external device, which in turn, may trigger the initiation of a communication sequence. The sensed presence and/or touch of the external device may then be communicated to a controller (e.g., processor 2154), which in turn may direct the exchange of information between a card (e.g., card 2100 of FIG. 21) and the external device. The sensed presence and/or touch of the external device may be effective to, for example, determine the type of device or object detected.

For example, the detection may include the detection of, for example, a read-head of a magnetic stripe reader. In response, processor 2154 may activate one or more electromagnetic field generators 2170-2174 to initiate a communications sequence with, for example, one or more read-heads of a magnetic stripe reader. The timing relationships associated with communications to one or more electromagnetic field generators 2170-2174 and one or more read-heads of a magnetic stripe reader may be provided through use of the detection of the magnetic stripe reader.

Persons skilled in the art will appreciate that processor 2154 may provide user-specific and/or card-specific information through utilization of any one or more buttons (e.g., buttons 2110-2118 of card 2100 of FIG. 21), RFID 2162, IC chip 2160, electromagnetic field generators 2170-2174, and other input and/or output devices 2168.

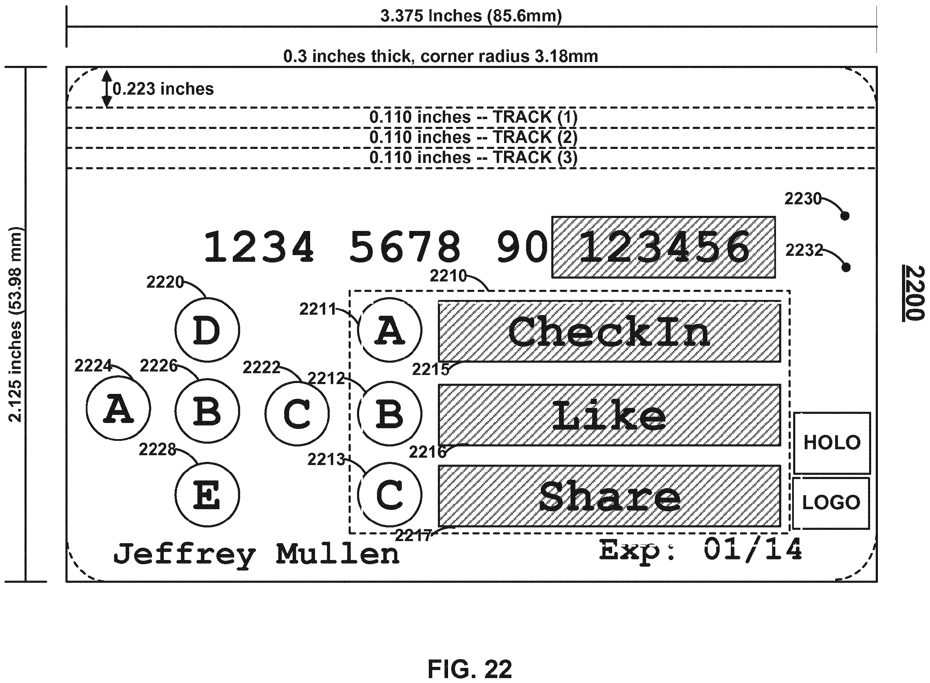

FIG. 22 shows card 2200 that may include, for example, configuration 2210. Configuration 2210 may include, for example, button 2211, button 2212, button 2213, display 2215, display 2216, and display 2217. Button 2211 may be associated with display 2215. Button 2211 may be pressed to utilize the option described by display 2215. Button 2212 may be associated with display 2216. Button 2212 may be pressed to utilize the option described by display 2216. Button 2213 may be associated with display 2217. Button 2213 may be pressed to utilize the option described by display 2217. A card may include additional buttons or displays or may not include the number of buttons or displays of card 2200. For example, a card may include only a single button (e.g., button 2211) and only a single associated display (e.g., display 2215).

Card 2200 may download, store, and communicate information. Information may, for example, be downloaded into card 2200 via light sensor 2230. Light sensor 2230 may, for example, be sensitive to pulses of light and/or time varying light intensity and may be detected by a processor of card 2200 as data. Light source 2232 may, for example, generate pulses of light and/or time varying light intensity as directed by a processor of card 2200 as data.

Information utilized or communicated by a card, other device, or merchant terminal may include, for example, customer profile data, merchant information, and issuer information. Information utilized or communicated by a card, other device, or merchant terminal may include, for example, information associated with social networks, internet search providers, corporations, charities, or any other entity.

Activation of one or more buttons on card 2200 may cause a processor of card 2200 to exchange information. Activation of one or more buttons on card 2200 may, for example, cause a processor of card 2200 to exchange information via light sensor 2230 and/or light source 2232. Activation of one or more buttons on card 2200 may, for example, cause a processor of card 2200 to communicate information to a magnetic stripe reader during, for example, a financial transaction. Activation of one or more buttons on card 2200 may, for example, cause a processor of card 2200 to communicate information to a magnetic stripe reader without the need to conduct a financial transaction.

Information utilized or communicated by a processor of card 2200 may be downloaded into card 2200 via manual input provided to card 2200 via one or more buttons 2220-2228. Information utilized or communicated by a processor of card 2200 may be communicated to card 2200 via a card-to-card transfer from another card. A light source of another card may, for example, generate light pulses that may be detected by light sensor 2230 and construed by a processor of card 2200 as data.

Information utilized or communicated by a processor of card 2200 may be communicated to card 2200 via a monitor or display that is capable of providing flashing light. Accordingly, for example, any location (e.g., a website, an ATM, a bank branch, a card personalization machine, kiosk, or merchant terminal) that provides such a monitor or display may communicate to card 2200.

Actuation of button 2211 may activate an option indicated by display 2215. A check-in feature, for example, may be activated by pressing button 2211. Once a check-in feature is activated, a user of card 2200 may communicate transaction, feature information, and/or any other type of information from card 2200 to, for example, a merchant terminal.

A check-in feature may be stand alone. For example, a user may arrive at a particular place of business and present card 2200 to a merchant terminal (e.g., a magnetic stripe reader) without transacting a purchase with the merchant. Accordingly, for example, a user may press button 2211 and swipe card 2200 at the merchant's terminal to register the user's presence at a particular place of business. In so doing, for example, a merchant terminal may receive customer information from card 2200 that may be related to a user of card 2200 and may distribute such customer information to multiple parties (e.g., the merchant, the card issuing financial institution, a website, or a social network).

A check-in feature may be associated with a financial transaction. For example, a user may select a check-in option on card 2200 and present card 2200 at a merchant's terminal to complete a point-of-sale purchase. Accordingly, for example, a user may press button 2211 and swipe card 2200 at a merchant's point-of-sale terminal and customer information relating to a user of card 2200 may be communicated to the merchant's point-of-sale terminal, for example, within one or more data fields (e.g., one or more discretionary data fields). The merchant's point-of-sale terminal may, for example, combine merchant information (e.g., merchant location, merchant identification, and purchase transaction details) with customer information received from card 2200. The merchant's point-of-sale terminal may, for example, forward the combined customer and merchant information to, for example, a routing server for further processing.

Actuation of button 2212 may activate an option indicated by display 2216. A like feature, for example, may be activated by pressing button 2212. Once a like feature is activated, card 2200 may communicate customer information and/or transactional information to a merchant terminal or any other terminal that may be enabled to communicate with card 2200. Accordingly, for example, a user of card 2200 may communicate a purchase emotion (e.g., a user likes a particular purchase) during a point-of-sale transaction. In so doing, a user may communicate a purchase emotion that may be associated with a particular merchant, product, or purchase.

Actuation of button 2213 may activate an option indicated by display 2217. A share feature, for example, may be activated by pressing button 2213. A share feature may, for example, allow a user of card 2200 to share transaction, feature information, and/or any other type of information to an extended audience. For example, a user of card 2200 may elect to provide transaction, feature information, and/or any other type of information to a predetermined set of recipients after a share feature is activated and communicated to a merchant terminal.

Any one or all of the features displayed in displays 2215, 2216 and/or 2217 may be associated with a special option. For example, a check-in special option may be activated upon the subsequent actuation of, for example, button 2211 after a check-in feature is activated (e.g., a feature associated with display 2215). Other buttons (e.g., buttons 2220-2228) may be used to activate the special option after the check-in feature is selected. In so doing, for example, a merchant may provide special offers in exchange for a cardholder's participation with a check-in feature.

For example, a cardholder may claim discounts or free merchandise that may be offered by a merchant in exchange for the cardholder's participation with a check-in feature. Such merchant offers may be downloaded into card 2200 and displayed to a cardholder prior to the cardholder's participation.

In the event that a cardholder activates a check-in special option, card 2200 may communicate an indication to a merchant's point-of-sale terminal that the cardholder wishes to redeem the merchant's special offer. Such a merchant's special offer, for example, may be applied by the merchant prior to payment processing. Such a merchant's special offer, for example, may be sent to the card issuer where the special may be settled or sent to other parties for reconciliation.

Special options may, for example, be similarly associated with utilizations of other check-in features (e.g., a like feature associated with display 2216 and a share feature associated with display 2217). Special options may, for example, only be activated upon a certain number of utilizations of a check-in feature (e.g., a feature associated with display 2215), a like feature (e.g., a feature associated with display 2216), and/or a share feature (e.g., a feature associated with display 2217).

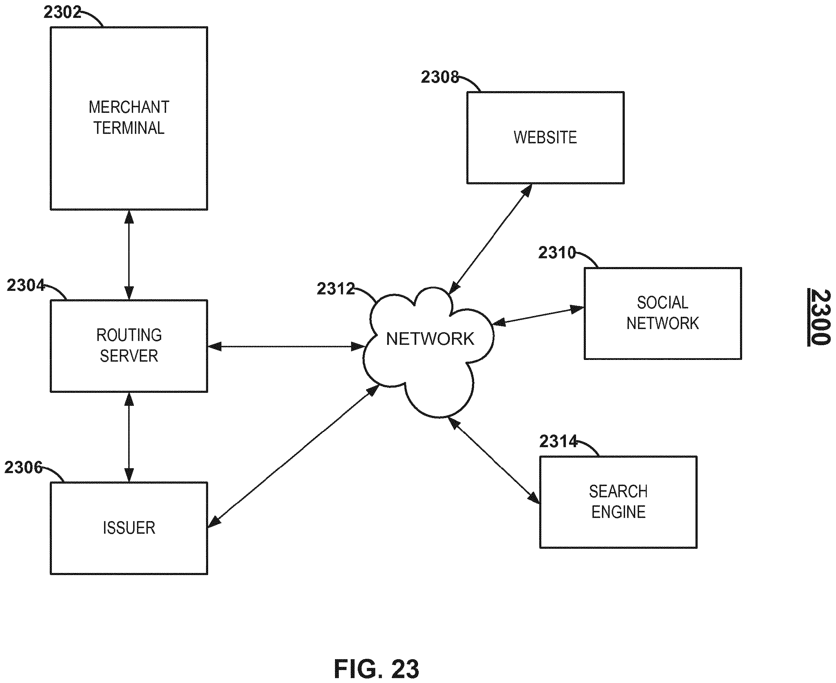

FIG. 23 shows system 2300. System 2300 may, for example, include merchant terminal 2302, routing server 2304, issuer 2306, network 2312, website 2308, social network 2310, and search engine 2314. Merchant terminal 2302 may collect payment transaction data, feature information, and/or any other type of information from a card that may be presented to merchant terminal 2302. Merchant terminal 2302 may collect transaction, feature information, and/or any other type of information from a card, for example, during a check-in event. Merchant terminal 2302 may collect transaction, feature information, and/or any other type of information from a card during a point-of-sale transaction that may be accompanied by a check-in event.

Merchant terminal 2302 may, for example, forward the transaction, feature information, and/or any other type of information collected from a card to routing server 2304. Merchant terminal 2302 may, for example, combine merchant data (e.g., merchant identification, merchant location, and merchant category) with transaction, feature information, and/or any other type of information collected from a card. Merchant terminal 2302 may, for example, forward the combined information to routing server 2304. Routing server 2304 may, for example, parse the forwarded information received from merchant terminal 2302 and forward the parsed information to issuer 2306.

Upon receipt of the parsed information, issuer 2306 may share all, or part, of the received information with other network entities accessible via network 2312. For example, issuer 2306 may exercise an agreement with an application provider on network 2312, such that all, or part, of the combined information may be shared with the application provider in the event that the cardholder has exercised a check-in feature. In so doing, the cardholder may, for example, be entitled to benefits (e.g., rewards points or incentives) from the application provider in exchange for the shared information.

Routing server 2304 may forward information to network 2312 for disbursement to one or more entities that may be interconnected via network 2312 (e.g., the internet). The forwarded information may, for example, contain information associated with a check-in feature. For example, data that may be relevant to a cardholder's purchase activity (e.g., cardholder's location during a purchase, a purchased product description, and amount of purchase) may be reported to a network entity. The combined information may, for example, contain information associated with the cardholder (e.g., the cardholder's demographic information, the cardholder's purchase history in the merchant's category, and the cardholder's purchase history at the merchant's place of business). The combined information may, for example, contain information associated with the merchant (e.g., merchant's identification, merchant's location, and merchant's category).

Information provided by routing server 2304 may, for example, be propagated to various network entities that may be connected to network 2312. Website 2308, for example, may collect the information and may generate associated updates. Social network 2310 may, for example, interoperate with website 2308, such that the generated updates may support social gaming activity that may be associated with the check-in activity of one or more cardholders. For example, social network 2310 may sponsor a social gaming activity, whereby check-in updates collected by website 2308 may be used to reward a cardholder that may have achieved a threshold level of check-in activity.

Search engine 2314 may, for example, collect information that may be provided by routing server 2304. Accordingly, for example, search engine 2314 may allow merchants and other entities to gather information and/or data about existing and potential customers, so that optimized incentives may be offered that may lure new customers and/or retain current customers. Search engine 2314 may, for example, allow consumers to obtain relevant promotions from merchants that may, for example, be offering incentives and promotions to lure new customers.

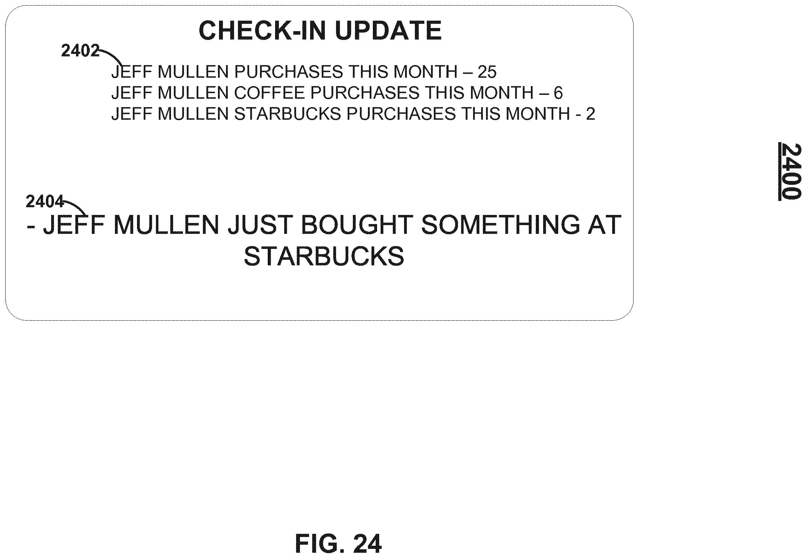

FIG. 24 shows webpage 2400. Webpage 2400 may, for example, provide customized summary 2402 of check-in data updates for a particular check-in user, as may be generated by a network entity collecting information as may be provided by one or more routing servers and/or one or more associated merchant terminals. Summary 2402 may, for example, provide a summary of a number of purchases in any category for a given time period (e.g., total purchases in a one-month time period). Summary 2402 may, for example, provide check-in summary data that may be associated with a particular merchant category (e.g., coffee merchants). Summary 2402 may, for example, provide check-in summary data that may be associated with a particular merchant in a particular merchant category (e.g., Starbucks).

Webpage 2400 may, for example, provide instantaneous update 2404 that may provide substantially instantaneous check-in activity for a particular check-in participant (e.g., that a purchase just occurred for a particular check-in participant at a particular merchant's place of business).

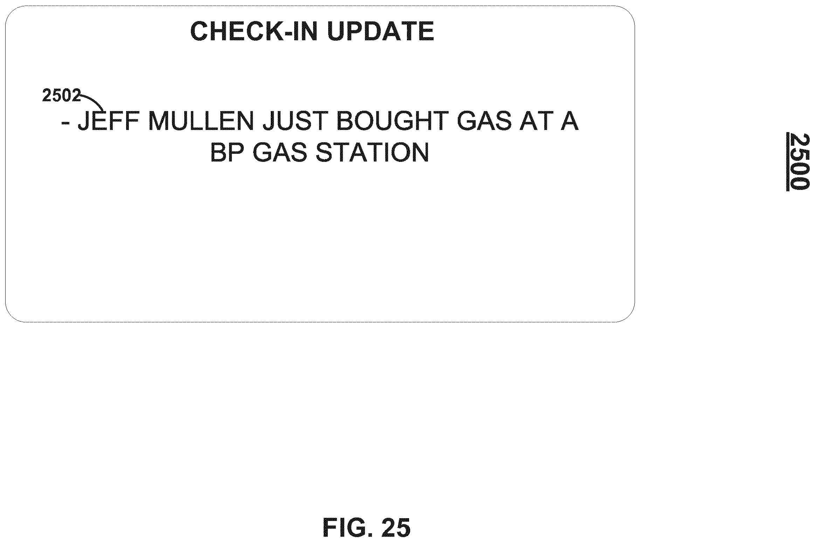

FIG. 25 shows webpage 2500. Webpage 2500 may, for example, provide substantially instantaneous check-in update information 2502 concerning a particular check-in participant. Update information 2502 may, for example, provide information concerning a purchase of a product from a particular category of products. Update information 2502 may, for example, provide information concerning a purchase of a particular product type from a particular product merchant.

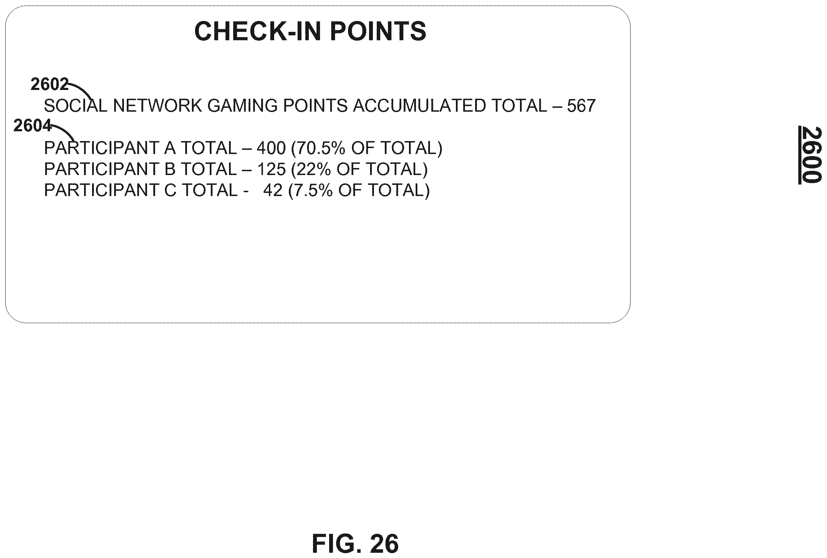

FIG. 26 shows webpage 2600. Webpage 2600 may, for example, provide check-in activity updates that may be associated with the gaming activities of members of a social network. Check-in points may, for example, be accumulated for one or more participants in a social network game. Check-in points may, for example, be accumulated for any number of check-in activities that may be conducted by the participants of such a social network gaming activity.

For example, participants may accumulate points by utilizing a card, or a mobile telephonic device, by activating a check-in feature during financial transactions. Participants may accumulate points by activating any number of information exchange features (e.g., a check-in feature, a like feature, and a share feature) that may or may not be associated with a financial transaction.

A check-in feature with no special options may, for example, award a minimum number of points to a participant when activated during a financial transaction. A check-in feature with a single special option selected (e.g., a like feature) may, for example, award an increased number of points to a participant when activated during a financial transaction. A check-in feature with more than one special option selected (e.g., a like feature and a share feature) may, for example, award an increased number of points to a participant when activated during a financial transaction.

Accumulated point totals 2604 for each participant of a social network game may, for example, be updated and downloaded into that participant's card or mobile telephonic device. In so doing, for example, a participant may monitor a number of points accumulated and may adjust his or her check-in activity accordingly. For example, a participant may increase his or her check-in activity and associated special option selections if that participant believed such activity would increase his or her accumulated point total.

An accumulated point total may, for example, be redeemed at a point-of-sale terminal. Accordingly, for example, a user may monitor his or her accumulated point total directly on his or her card or mobile telephonic device to determine if the accumulated point total has achieved a desirable value. If so, for example, a user may redeem the accumulated point total at a merchant's point-of-sale terminal for discounts or other benefits.

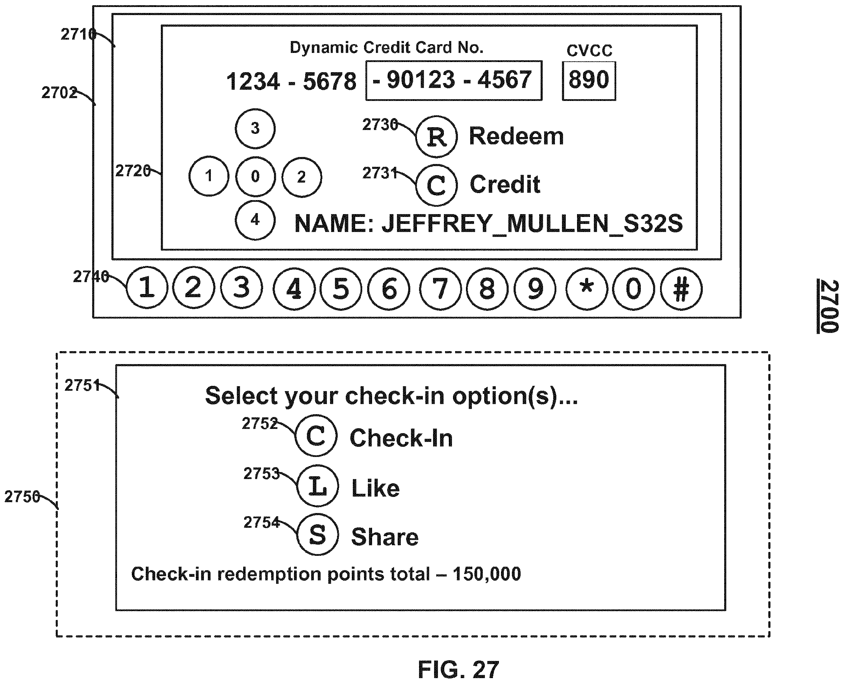

FIG. 27 shows device 2700 that may be, for example, a mobile telephonic device such as a mobile cellular phone. Any card provided herein may be provided as a virtual card on device 2700. Mechanical buttons 2740 may be utilized by a user to make selections (e.g., selections associated with a virtual card). Virtual buttons may be included that a user can activate (e.g., by utilizing a touch-screen displaying a virtual card) so that the user can make selections associated with the virtual card. Device 2700 may include, for example, housing 2702, display 2710, virtual card 2720, and virtual buttons 2730 and 2731. Device 2700 may communicate to a card reader via electromagnetic signals (e.g., RF signals). Virtual button 2730 may, for example, be associated with a redemption of points awarded for check-in activity. Button 2731 may, for example, be associated with selecting a particular payment card account (e.g., credit account).

Display configuration 2750 may be provided and may be displayed, for example, on a wireless device such as a wireless telephonic device or a wireless payment card. Configuration 2750 may include graphical user interface 2751 that may include, for example, virtual button 2752, virtual button 2753, and virtual button 2754. A user may be provided with the option of selecting a check-in feature, a like feature and/or a share feature. A user may perform a selection by pressing the virtual button associated with the selection. Information associated with the selection may be provided, for example, to a remote server (e.g., via a telephonic data communication) and/or a card (e.g., via light and/or sound pulses). A user may select one or more buttons on a physical card that are labeled as, for example, a "check-in" button, a "like" button, and/or a "share" button. Information indicative of that selection may then be communicated from the card to a card reader (e.g., via magnetic stripe data or RFID data) and then provided to a routing server. The routing server may then determine the level of information exchange that the user previously selected and initiate processing of the information exchanged.

Processing of an information exchange associated with a check-in feature may, for example, include a limited information exchange, where minimal information/data (e.g., cardholder identification and/or merchant identification) may be provided. A routing server may then parse the information and provide the information to various networked entities (e.g., entities networked via the internet).

A check-in feature and/or a like feature may be selected to denote a higher level of information/data sharing. For example, activation of a like feature may include an increased amount of information/data to be exchanged (e.g., cardholder identification, merchant identification, and/or transaction details). A check-in feature and/or a share feature may, for example, invoke even a higher level of information/data exchange (e.g., cardholder identification and/or merchant identification shared with an expanded audience).

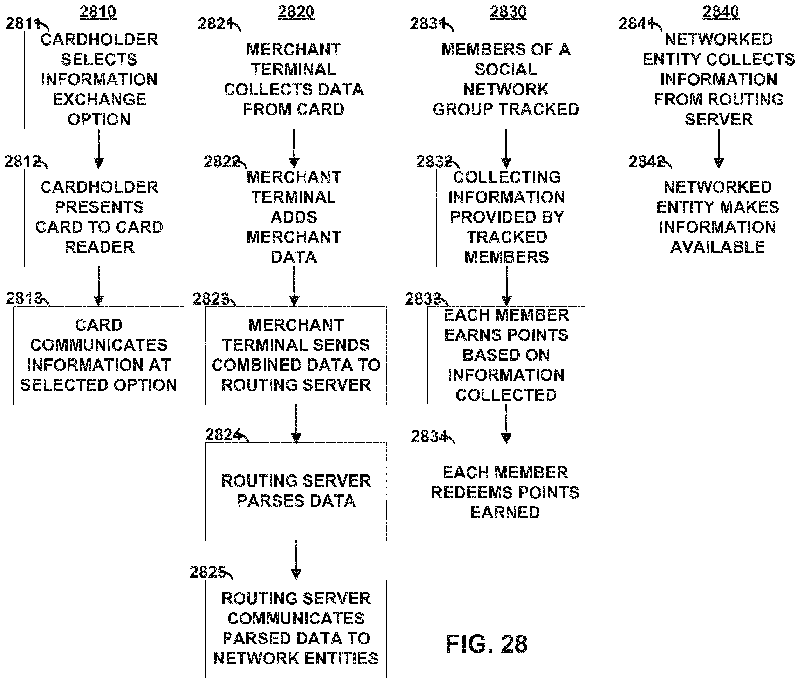

A flow diagram of process sequences is shown in FIG. 28. Step 2811 of sequence 2810 may include, for example, selecting an information exchange option, where depending upon the option selected, varying levels of information/data sharing may be selected. Steps 2812-2813 may include presenting a card to a card reader and communicating the information exchange option and the associated information/data to the card reader.

Step 2821 of sequence 2820 may include, for example, a merchant terminal for collecting information/data provided by a card as well as an information exchange option selected by the card. Step 2822 may include, for example, combining the information/data collected from a card with merchant information added by a merchant terminal or not combining merchant information with the information/data collected from the card. An amount of information combined by the merchant terminal may, for example, depend upon the information exchange option selected by the card. Step 2823 may include, for example, sending the combined information/data from a merchant terminal to a routing server or simply forwarding the information/data collected from the card to a routing server. Step 2824 may include, for example, parsing the information/data received by the routing server from the merchant terminal. Step 2825 may include, for example, communicating the parsed information to network entities, such as search engines, websites, and social networks.

Step 2831 of sequence 2830 may include, for example, tracking check-in activities of members of a social network. Step 2832 may include, for example, collecting information provided by the tracked members based upon information collection options that each member may have selected. Step 2833 may include, for example, earning points based upon, for example, an amount and/or quality of information collected from each member. Step 2834 may include, for example, each member's redemption of points earned based upon information collected from each member.

Step 2841 of sequence 2840 may include, for example, collection of information provided by a routing server. The information collected by the routing server may include, for example, customer profile data, customer purchase history, customer purchase preference, merchant identification, geographic location, merchant category, merchandise identification, merchandise description, merchandise price, merchandise discounts, merchant promotions, bank promotions, bank identification, and/or any other data. The collected information may, for example, be made available on a network (e.g., the internet) as in step 2842. Accordingly, the collected information may be network accessible by, for example, websites, search engines, and social networks.

Persons skilled in the art will also appreciate that the present invention is not limited to only the embodiments described. Instead, the present invention more generally involves dynamic information. Persons skilled in the art will also appreciate that the apparatus of the present invention may be implemented in other ways than those described herein. All such modifications are within the scope of the present invention, which is limited only by the claims that follow.

### Additional Statements

There is provided a payment device comprising a processor and an output device for providing payment data and game action data to a payment card reader, wherein said payment data is utilized to authorize a payment transaction and said game action data is utilized to impact a video game.

Preferably, said output device is an RF-based communications device.

Preferably, said output device is a dynamic magnetic stripe communications device.

Preferably, said output device is an IC chip.

Preferably, the payment device further comprises a plurality of buttons.

Preferably, the payment device further comprises a plurality of buttons, wherein at least one of said plurality of buttons is associated with said game action data.

Preferably, the payment device further comprises a plurality of buttons and a display.

Preferably, the payment device further comprises a plurality of buttons and a plurality of displays.

Preferably, the payment device further comprises a light sensor.

Preferably, the payment device is a mobile telephonic device.

Preferably, the payment device is a payment card.

There is provided a payment device comprising a processor and an output device for providing payment data and game currency award data to a payment card reader, wherein said payment data is utilized to authorize a payment transaction and said game currency award data is utilized to provide virtual currency in a video game.

Preferably, said output device is an RF-based communications device.

Preferably, said output device is a dynamic magnetic stripe communications device.

Preferably, said output device is an IC chip.

Preferably, the payment device further comprises a plurality of buttons, wherein at least one of said plurality of buttons is associated with said game action data.

Preferably, the payment device further comprises a plurality of buttons and a display.

Preferably, the payment device further comprises a light sensor.

Preferably, the payment device is a mobile telephonic device.

Preferably, said payment device is a payment card.

There is provided a method, comprising: receiving a coupon on a payment card; storing said coupon on said payment card; pressing a first button on said card to purchase said coupon; and redeeming said coupon.

Preferably, the method further comprises pressing a second button on said card to provide said redeeming.

Preferably, said redeeming further comprises communicating information from a communications device on said card to a payment terminal.

Preferably, the method further comprises displaying said coupon on a display of said card.

Preferably, said redeeming further comprises communicating information associated with said coupon from said card to an external device.

Preferably, said redeeming further comprises communicating first information, associated with said coupon, to an external device and communicating second information, associated with a payment card number of said card, to said external device.

Preferably, said first button is a touch button.

There is provided a method, comprising: receiving data from a payment card that includes first information associated with a payment account and second information associated with a deal, wherein said second information was provided in said data as a result of manual input provided into said payment card; locating said deal from a plurality of deals; completing a purchase transaction based, at least in part, on said first information; and completing a deal redemption based, at least in part, on said second information.

Preferably, said deal is a time-sensitive periodic deal.

Preferably, said data is received by a payment card reader.

Preferably, said data is received by a remote server.

Preferably, said deal is located by a remote server.

Preferably, the method further comprises providing said data from a magnetic stripe communications device on said payment card.

Preferably, the method further comprises providing said data from an RF-based communications device on said payment card.

Preferably, the method further comprises providing said data from an IC chip on said payment card.

There is provided a system comprising: a payment device comprising: a communications device for providing stored data that includes first information associated with a payment account and second information associated with a deal; and a device for receiving manual input, wherein said second information is operable to be provided in said data as a result of said manual input; and a remote server for receiving said data and locating said deal from a plurality of deals, wherein a purchase transaction is operable to be completed based, at least in part, on said first information and a deal redemption is operable to be completed based, at least in part, on said second information.

Preferably, said payment device is a payment card.

Preferably, said payment device is a mobile telephonic phone.

Preferably, said communications device comprises an RF-based communications device.

Preferably, said communications device comprises a dynamic magnetic stripe communications device.

Preferably, said payment device further comprises a display.

There is provided a method, comprising: selecting a check-in option on a payment device; communicating a payment account number and information associated with said selected check-in option to a merchant terminal as part of a purchase transaction; authorizing said purchase transaction; and updating a user profile, associated with said payment account number, that said user checked-in with a merchant associated with said merchant terminal.

Preferably, said communicating is provided by a communications device on said payment device.

Preferably, said communicating is provided by a communications device on said payment device and said communications device is an RF-based communications device.

Preferably, said communicating is provided by a communications device on said payment device and said communications device provides an electromagnetic signal.

Preferably, said communicating is provided by a communications device on said payment device and said communications device comprises a dynamic magnetic stripe communications device.

Preferably, said payment device is a payment card.

Preferably, said payment device is a mobile telephonic device.

Preferably, said payment device is a payment card having a display and a plurality of buttons.

Preferably, said user profile is stored on a remote server.

Preferably, the method further comprises providing at least a portion of said user profile as at least a portion of a webpage.

Preferably, the method further comprises updating said user profile with a total amount of said purchase transaction.

Preferably, said authorization is provided by a remote server.

Preferably, said updating is provided by a remote server.

Preferably, said payment device comprises a battery, a processor, and a plurality of buttons.

Preferably, said payment device comprises a battery, a processor, a plurality of buttons, an RFID antenna, and a display.

Preferably, said payment device comprises a battery, a processor, a plurality of buttons, and a dynamic magnetic stripe communications device.

Preferably, said payment device comprises a plurality of displays.

There is provided a payment device comprising: a means for processing; and a means for providing payment data and game action data to a payment card reader, wherein said payment data is utilized to authorize a payment transaction and said game action data is utilized to impact a video game.

There is provided a payment device comprising: a means for processing; and a means for providing payment data and game currency award data to a payment card reader, wherein said payment data is utilized to authorize a payment transaction and said game currency award data is utilized to provide virtual currency in a video game.

There is provided a system comprising: a payment device comprising: a means for providing stored data that includes first information associated with a payment account and second information associated with a deal; and a means for receiving manual input, wherein said second information is operable to be provided in said data as a result of said manual input; and a means for receiving said data and locating said deal from a plurality of deals, wherein a purchase transaction is operable to be completed based, at least in part, on said first information and a deal redemption is operable to be completed based, at least in part, on said second information.

There is provided a system, comprising: a means for selecting a check-in option on a payment device; a means for communicating a payment account number and information associated with said selected check-in option to a merchant terminal as part of a purchase transaction; a means for authorizing said purchase transaction; and a means for updating a user profile, associated with said payment account number, that said user checked-in with a merchant associated with said merchant terminal.

## Claims

1. A method, comprising:
receiving a coupon by a processor on a payment card;
storing said coupon into memory on said payment card;
receiving, by said processor, a signal from a first button on said payment card, said signal indicative of a selection to purchase said coupon; and
redeeming, by said payment card, said coupon,
wherein said coupon is non-redeemable prior to said receiving a signal.

2. The method of claim 1, wherein said processor is operable to receive a signal from a second button on said card to provide said redeeming.

3. The method of claim 1, wherein said redeeming further comprises communicating information from a communications device on said card to a payment terminal.

4. The method of claim 1, further comprising displaying said coupon on a display of said card.

5. The method of claim 1, wherein said redeeming further comprises communicating information associated with said coupon from said card to an external device.

6. The method of claim 1, wherein said redeeming further comprises communicating first information, associated with said coupon, to an external device and communicating second information, associated with a payment card number of said card, to said external device.

7. The method of claim 1, wherein said first button is a touch button.

8. A method, comprising:
receiving data from a payment card that includes first information associated with a payment account and second information associated with a deal, wherein said second information was provided in said data as a result of manual input provided into said payment card;
locating said deal from a plurality of deals;
completing a purchase transaction based, at least in part, on said first information; and
completing, by a device, a deal redemption based, at least in part, on said second information.

9. The method of claim 8, wherein said deal is a time-sensitive periodic deal.

10. The method of claim 8, wherein said data is received by a payment card reader.

11. The method of claim 8, wherein said data is received by a remote server.

12. The method of claim 8, wherein said deal is located by a remote server.

13. The method of claim 8, further comprising providing said data from a magnetic stripe communications device on said payment card.

14. The method of claim 8, further comprising providing said data from an IC chip on said payment card.

15. A system comprising:
a payment device comprising:
a communications device for providing stored data that includes first information associated with a payment account and second information associated with a deal;
a device for receiving manual input,
wherein said second information is operable to be provided in said data as a result of said manual input; and
a remote server for receiving said data and locating said deal from a plurality of deals, wherein a purchase transaction is operable to be completed based, at least in part, on said first information and a deal redemption is operable to be completed based, at least in part, on said second information.
